# EUROPÄISCHE PATENTSCHRIFT

(11) **EP 4 122 765 B1**
(45) Veröffentlichungstag und Bekanntmachung des Hinweises auf die Patenterteilung: **08.04.2026**
(21) Anmeldenummer: 22186587.6
(22) Anmeldetag: 22.07.2022
(51) Int. Cl.: G07C 9/00, B60R 25/20, G03H 1/22, G02B 5/32, H04N 9/31, B60Q 1/26, B60Q 1/50, G06V 20/56, G06V 40/16, G06V 40/60, G02B 27/00, G03H 1/24, G03H 1/26, H04N 13/204, H04N 23/55, G07C 9/25

(54) **HOLOGRAPHISCHE ZUGANGSKONTROLLE**
HOLOGRAPHIC ACCESS CONTROL
CONTRÔLE D'ACCÈS HOLOGRAPHIQUE

(30) Priorität: 23.07.2021 DE 102021207987
(43) Veröffentlichungstag der Anmeldung: 25.01.2023
(73) Patentinhaber: Carl Zeiss Jena GmbH, 07745 Jena (DE)
(72) Erfinder: Schuetz, Viktor, 07745 Jena (DE); Maret, Isabelle, 07745 Jena (DE); Heuer, Robert, 07745 Jena (DE); Erler, Christoph, 07745 Jena (DE); Kleindienst, Roman, 07745 Jena (DE)

(56) Entgegenhaltungen:
- EP-A1- 3 002 736
- DE-A1- 102019 102 610
- US-A1- 2006 097 844
- US-A1- 2016 012 654
- US-A1- 2016 300 410

## Beschreibung

Die Erfindung betrifft ein System für eine funktionalisierte Scheibe einer Tür, durch die eine personen- und/oder objektgebundene Autorisierungskontrolle durchgeführt werden kann. Für die personengebundene Kontrolle kann mindestens eine holographisch-basierte, stereoskopische Holocam umfasst sein, welche in die Scheibe integriert werden kann. Weiterhin kann eine holographische Anzeige umfasst sein, welche ebenfalls in die Scheibe integriert werden kann.

Durch entsprechende Verfahren können kontrolliert durch die Steuerungseinrichtung die Autorisierungskontrolle durchgeführt werden und ein Schließmechanismus einer Tür und eine holographische Anzeige gesteuert werden.

### Hintergrund und Stand der Technik:

Es sind funkbasierte Zugangskontrollen für Fahrzeuge bekannt, die eine objektgebundene Autorisierung einer Person anhand des von ihr mitgeführten Schlüssels durchführen, wenn die Person einen Nahbereich des Fahrzeugs betritt. Es ist jedoch bekannt, dass solche Systeme für sich genommen an einem Sicherheitsproblem leiden. Daher ist eine Zwei-Faktor-Authentifizierung für Fahrzeuge, aber auch in anderen Bereichen, z. B. bei Gebäudetüren vorteilhaft. Eine 2-Faktor-Authentifizierung verhindert beispielsweise bei Diebstahl des Schlüssels / Klonen des Schlüssels den Zugang zum Fahrzeug. Leider ist jedoch eine solche Authentifizierung oftmals sehr unpraktisch, wenn beispielsweise jedes Mal ein Passwort eingegeben muss, um Zutritt zu erlangen. Eine Identifikation der Person selbst, anhand ihrer optischen Merkmale (Beispiel: Gesichtserkennung), ist daher vorteilhaft. Jedoch ist es zum einen oftmals schwierig, die dafür benötigte Optik einer Kamera in der Tür unterzubringen, ohne dass der Platzbedarf anderer erwünschter Komponenten leidet. Zum anderen kann eine solche Gesichtserkennung leicht getäuscht werden, z. B. dadurch, dass anstatt der Person selbst lediglich ein Bild dieser Person vorgezeigt wird. Dieses Problem kann beispielsweise durch eine dreidimensionale Gesichtserkennung behoben werden, was den Platzbedarf allerdings noch weiter erhöht.

Auch den Möglichkeiten einer holographischen Anzeige oder eines holographischen Bedienelementes, bspw. um die Authentifizierung oder die Bedienung der Tür zu erleichtern, intuitiver zu gestalten oder berührungslos vorzunehmen, sind aufgrund des Platzbedarfs enge Grenzen gesetzt. Ein solches System ist z.B. aus der EP 3 002 736 A1 bekannt. Oftmals sollen diese Elemente auch aus ästhetischen Gründen oder aus Sicherheitsgründen unsichtbar sein.

Insbesondere sollen Türen aus praktischen Gründen oft großflächig mit transparenten Flächen wie Fenstern versehen werden, welche jedoch die Verwendung der vorgenannten Funktionalitäten und Elemente erschwert, da diese typischerweise nicht in der Fensterfläche untergebracht werden können.

### Aufgabe der Erfindung:

Es ist eine Aufgabe der Erfindung, ein System, eine Tür und/oder ein Verfahren, ohne die Nachteile des Standes der Technik bereitzustellen.

Insbesondere ist es eine Aufgabe der Erfindung, ein System oder ein Verfahren bereitzustellen, welches eine sichere Autorisierungskontrolle vornimmt und intuitiv, einfach und hygienisch bedienbar ist und dabei das äußere Erscheinungsbild und die Transparenz von einer Scheibe nicht beeinträchtigt. Funktionalisierte Scheiben sind z.B. aus der DE 10 2019 102610 A1 bekannt.

### Zusammenfassung der Erfindung:

Die Aufgabe wird durch die Merkmale der unabhängigen Ansprüche gelöst. Bevorzugte Ausführungsformen der Erfindung sind in den abhängigen Ansprüchen beschrieben.

In einem ersten Aspekt betrifft die Erfindung ein System für eine Türöffnungssteuerung einer Tür oder einer Klappe mit einer funktionalisierten Scheibe, umfassend einen transparenten Basiskörper mit einer Vorder- und einer Rückseite für die funktionalisierte Scheibe, mindestens eine holographische Kamera für eine stereoskopische Bildaufnahme eines festgelegten Detektionsbereichs gegenüber der Vorderseite und/oder der Rückseite des transparenten Basiskörpers und eine Steuerungseinrichtung.

Dabei weist die holographische Kamera mindestens ein von dem Basiskörper umfasstes Aufnahmehologramm zur Umlenkung von Lichtstrahlen aus dem Detektionsbereich auf. Außerdem sind die Kamera und die Steuerungseinrichtung eingerichtet für eine personengebundene Autorisierungskontrolle einer durch die stereoskopische Bildaufnahme aufgenommenen Person, wobei die personengebundene Autorisierungskontrolle auf mindestens einer durch die stereoskopische Bildaufnahme feststellbaren Eigenschaft der Person beruht. Die Steuerungseinrichtung ist dabei eingerichtet, ein Entriegelungssignal für ein Öffnen der Tür bei mindestens einer personengebundenen Autorisierung auszugeben.

Die mindestens eine holographische Kamera für eine stereoskopische Bildaufnahme eines festgelegten Detektionsbereichs gegenüber der Vorderseite und/oder der Rückseite des transparenten Basiskörpers beschreibt vorzugsweise mindestens eine holographische Kamera für eine stereoskopische Bildaufnahme eines festgelegten Detektionsbereichs, welcher sich gegenüber der Vorderseite und/oder der Rückseite des transparenten Basiskörpers befinden kann.

Dass die holographische Kamera mindestens ein von dem Basiskörper umfasstes Aufnahmehologramm zur Umlenkung von Lichtstrahlen aus dem Detektionsbereich aufweist bedeutet vorzugsweise, dass das System mindestens ein im oder am Basiskörper angeordnetes Aufnahmehologramm zur Umlenkung von Lichtstrahlen aus dem Detektionsbereich für die holographische Kamera aufweist. Dieses Aufnahmehologramm, kann, aber muss nicht als Bestandteil der holographischen Kamera angesehen werden, es kann darüber hinaus Bestandteil eines holographischen Kamerasystems sein.

Eine Umlenkung von Lichtstrahlen für die Kamera ist insbesondere eine Umlenkung von Lichtstrahlen, damit diese von der Kamera detektiert werden können.

Der Fachmann legt Begriffe wie "System" nicht so aus, dass alle vom System umfassten Bestandteile separate Bestandteile sind. Ein Bestandteil kann bspw. ein anderes Bestandteil umfassen. Der Begriff "System" ist vielmehr in dem Sinne zu verstehen, dass hier Komponenten beansprucht werden, welche vorzugsweise eine Vorrichtung mit mindestens einer Komponente umfassen, welche für den Einbau in bspw. ein Fahrzeug oder ein Consumer Produkt vorgesehen ist. Die Funktionalität des Systems, welche durch die Merkmale des Systems ermöglicht werden, wird vorteilhafterweise durch den Einbau ermöglicht. Die Komponenten des Systems können dabei an unterschiedlichen Orten oder am gleichen Ort verbaut werden, wichtig ist vielmehr, dass die Merkmale des Systems nach dem Einbau in der beschriebenen Weise zusammenwirken können. Dabei kann das System von vorneherein eingebaut werden oder aber es kann auch möglich sein, dass System zu einem späteren Zeitpunkt am gewünschten Produkt bzw. Gegenstand nachzurüsten. Da ein solches Nachrüstset ebenfalls von den Ansprüchen umfasst sein soll und da das System auch unabhängig vom Produkt bzw. Gegenstand, in den es verbaut wird, beansprucht werden soll, wurde hier ein System beansprucht.

Eine Türöffnungssteuerung einer Tür oder einer Klappe mit einer funktionalisierten Scheibe betrifft insbesondere den Öffnungsprozess einer verschlossenen Tür. Es kann sich bei der Türöffnungssteuerung z. B. um eine Steuerung für eine Zugangskontrolle eines von der Tür verschlossenen Raumes, Gebäudes, Fahrzeugs oder Gerätes handeln.

Bei einer Tür kann es sich beispielsweise um eine Fahrzeugtür, eine Gebäudetür, eine Raumtür, eine Kühlschranktür, eine Ofentür, eine Waschmaschinentür, eine Trocknertür und/oder eine Kühltruhentür handeln. Eine Waschmaschinentür oder Trocknertür kann auch als Ladeluke bezeichnet werden. Es kann sich dabei um eine Innentür und/oder eine Außentür handeln. Es kann sich ebenso um eine Klappe handeln, z. B. um eine Kofferraumklappe eines Fahrzeugs, einen Tankdeckel eines Fahrzeugs etc. Wenn in diesem Dokument von Tür die Rede ist, sind vorzugsweise alle in diesem Dokument aufgezählten, Türen, Klappen, Deckel etc. mitabgedeckt.

Eine Türöffnungssteuerung einer Tür oder einer Klappe mit einer funktionalisierten Scheibe beschreibt vorzugsweise eine Türöffnungssteuerung einer Tür oder einer Klappe, wobei die Türöffnungssteuerung eine funktionalisierte Scheibe aufweist bzw. im Zusammenwirken mit der funktionalisierten Scheibe funktioniert. Diese funktionalisierte Scheibe kann Bestandteil der Türe oder der Klappe sein, jedoch kann diese auch außerhalb der Tür oder Klappe, bspw. daneben, angeordnet werden.

Eine Türöffnungssteuerung einer Tür oder einer Klappe mit einer funktionalisierten Scheibe beschreibt somit jedoch in manchen Fällen auch eine Türöffnungssteuerung für eine Tür oder eine Klappe, wobei die Tür oder die Klappe die funktionalisierte Scheibe aufweist. Die funktionalisierte Scheibe ist dann vorzugsweise ein fester, insbesondere ein materiell dichter, jedoch bevorzugt transparenter Teil der Türe bzw. Klappe. Z. B. kann es sich um eine Fensterscheibe handeln.

Es kann sich beispielsweise bei der Klappe auch um einen Tankdeckel handeln, wobei die funktionalisierte Scheibe Teil des Tankdeckels ist, vorzugsweise intransparent ist und der flächige Basiskörper auf die Scheibe aufgebracht ist und die Funktionalität ermöglicht.

Die funktionalisierte Scheibe ist beispielsweise aus Glas oder transparentem Kunststoff.

Vorzugsweise ist die funktionalisierte Scheibe ein flächiges Element.

Es kann sich jedoch auch um eine im Wesentlichen intransparente Scheibe handeln bzw. um eine Scheibe, die ausreichend transparent ist, um die Funktionalität zu ermöglichen, jedoch einen von außen nicht transparenten Eindruck macht, insbesondere, wenn sie auf einer intransparenten Fläche aufgebracht ist. Es kann sich bspw. um eine getönte Scheibe handeln.

Funktionalisiert bedeutet insbesondere, dass die Scheibe für eine Funktion, insbesondere wie in diesem Dokument beschrieben, verwendet werden kann. Beispielsweise kann die Scheibe für eine Kamera wie hier beschrieben oder eine Anzeige wie hier beschrieben verwendet werden.

Eine funktionalisierte Scheibe kann insbesondere ein flächiges Element mit den gewünschten optischen bzw. ästhetischen Eigenschaften sein. Eine funktionalisierte Scheibe kann insbesondere ein Substrat umfassen.

Der transparente Basiskörper mit einer Vorder- und einer Rückseite für die funktionalisierte Scheiben kann beispielsweise ein Teil der funktionalisierten Scheibe sein. Der transparente Basiskörper kann in manchen Fällen sogar die funktionalisierte Scheibe bilden.

Der transparente Basiskörper kann jedoch beispielsweise auch auf die funktionalisierte Scheibe aufgebracht sein, z. B. in Form mindestens einer Schicht. Vorzugsweise ermöglicht der transparente Basiskörper die Funktionalität.

Der transparente Basiskörper kann insbesondere ein Substrat sein.

Transparent bedeutet bevorzugt, dass man durch den Basiskörper hindurchschauen kann. Transparent bedeutet insbesondere, dass der Basiskörper einen auf die Intensität des Lichtes (vorzugsweise in eine Wellenlängenbereich zwischen 420 nm und 750 nm) bezogenen Transmissionsgrad von mindestens 40%, mindestens 45%, mindestens 50%, mindestens 55%, mindestens 60%, mindestens 65%, mindestens 70%, mindestens 75%, mindestens 80%, mindestens 85%, mindestens 90% und/oder mindestens 95% aufweist.

Transparent kann jedoch auch bedeuten, dass der Basiskörper die vorstehend beschriebene Transparenz nur für einen kleineren Wellenlängenbereich im genannten größeren Bereich aufweist, bspw. für einen Bereich von 100 nm oder weniger, 50 nm oder weniger oder 20 nm oder weniger innerhalb des Wellenlängenbereiches zwischen 420 nm und 750 nm. Der kleinere Wellenlängenbereich ist insbesondere so ausgesucht, dass die Funktionalität der hier beschriebenen Erfindung ermöglicht wird.

Der Basiskörper kann ausreichend transparent sein, um die gewünschte optische Funktionalität zu ermöglichen, jedoch einen von außen nicht transparenten Eindruck macht, insbesondere, wenn sie auf einer intransparenten Fläche aufgebracht ist. Es kann sich bspw. um eine getönten Basiskörper handeln.

Bevorzugt ist der transparente Basiskörper ein flächiger, transparenter Basiskörper. Flächig bedeutet dabei insbesondere eine breitere Fläche bildend, abgeflacht und/oder sich auf einer Fläche ausdehnend. Flächig kann beispielsweise bedeuten, dass der Basiskörper eine große Ausdehnung entlang einer Ebene oder Fläche aufweist und eine verhältnismäßig deutlich kleinere Ausdehnung in einer hierzu senkrechten Richtung. Dabei kann die Ebene oder Fläche auch eine gekrümmte Ebene oder Fläche sein. Deutlich kleinere Ausdehnung bedeutet vorzugsweise eine um mindestens einen Faktor zwei kleinere Ausdehnung als die kleinste Ausdehnung entlang der Fläche oder Ebene.

Der transparente Basiskörper kann dabei von einem funktionalisiertem Wellenleiter für ein Detektorsystem, wie in der WO 2020/157306 A1, der WO 2020/157307 A1, der WO 2020/157308 A1, der WO 2020/157309 A1, der WO 2020/157310 A1, der WO 2020/157311 A1, der WO 2020/157312 A1 und/oder der WO 2020/157313 A1 beschrieben ist.

Das Aufnahmehologramm kann vorzugsweise ein transmissives und/oder reflexives Hologramm umfassen.

Eine holographische Kamera (Holocam) ist vorzugsweise eine Kamera, die eingerichtet ist, dass auf die Vorder- oder Rückseite des transparenten Basiskörpers treffende Strahlung als Bild aufgenommen werden kann, vorzugsweise ohne dass die Transparenz des Basiskörpers bei einem Hindurchsehen wesentlich beeinflusst wird. Dies kann beispielsweise durch holographische und/oder diffraktive Struktur realisiert werden, welche von der Strahlung einen Teil umlenkt, z. B. auf einen geeigneten Bildsensor zur Bildaufnahme, entweder direkt oder unter Verwendung mindestens einer weiteren diffraktiven und/oder holographischen Struktur.

Holographische Kameras sind Stand der Technik und beispielsweise in den o. g. Schriften hinreichend beschrieben, so dass ein Fachmann weiß, wie er eine entsprechende holographische Kamera realisieren kann.

Daher weiß der Fachmann ebenso, wie er mindestens eine holographische Kamera für eine stereoskopische Bildaufnahme eines festgelegten Detektionsbereichs gegenüber der Vorderseite und/oder der Rückseite des transparenten Basiskörpers realisieren könnte.

Mindestens eine holographische Kamera für eine stereoskopische Bildaufnahme umfasst bevorzugt zwei holographische Kameras für eine stereoskopische Bildaufnahme. Dabei werden insbesondere die Bildaufnahmen der zwei holographischen Kameras für die stereoskopische Bildaufnahme verwendet und/oder zusammengeführt.

Mindestens eine holographische Kamera für eine stereoskopische Bildaufnahme kann bevorzugt ein holographisches Kamerasystem für eine stereoskopische Bildaufnahme sein. Ein holographische Kamerasystem kann eine oder mehrere der folgenden Komponenten umfassen: eine holographische Kamera, einen Bildsensor und/oder ein Aufnahmehologramm, welche die Eignung des Systems für eine stereoskopische Bildaufnahme ermöglichen.

Es können auch zwei holographische Kamerasysteme für eine Vorder- und eine Rückseite umfasst sein, bspw. aufweisend insgesamt mindestens vier holographische Kameras, z. B. um eine Aufnahme aus einer Tür für einen Innen- und einen Außenbereich zu realisieren.

Vorzugsweise beschreibt der Detektionsbereich einen räumlichen Bereich, aus dem heraus die für die Bildaufnahme verwendeten Lichtstrahlen kommen bzw. den diese Lichtstrahlen vor einem Auftreffen auf die Vorder- oder Rückseite des Basiskörper passiert haben.

Bspw. könnte der Fachmann für eine stereoskopische Bildaufnahme zwei einzelne Holocams verwenden, wie in diesem Dokument und in den o.g. Schriften beschrieben. Dabei könnte er die jeweils aufgenommene oder umgelenkte Strahlung bzw. das von dieser Strahlung herrührende Bildmaterial dergestalt kombinieren, so dass er eine stereoskopische Bildaufnahme erhält. Es kann auch bevorzugt werden, drei oder mehr holographische Kameras verwendet werden.

Stereoskopisch bedeutet bevorzugt, dass eine Bildaufnahme von zwei verschiedenen, vorzugsweise benachbarten Orten getätigt wird, um mindestens ein aufgenommenes Objekt, von vorzugsweise zwei leicht unterschiedlichen Betrachtungswinkeln aufzunehmen. So kann insbesondere räumliche Tiefeninformation durch die Aufnahme gewonnen werden und es kann durch die Aufnahme des mindestens einen Objektes aus den verschiedenen Winkeln vorteilhafterweise zusätzliche Information bei der Aufnahme mitaufgenommen werden. Eine stereoskopische Aufnahme ist vorzugsweise zu vergleichen mit der Betrachtung mindestens eines Objektes durch ein Augenpaar. Durch den Abstand der Augen und den daraus resultierenden leicht unterschiedlichen Blickwinkel kann der Betrachter räumliche Informationen bei der Betrachtung gewinnen, bspw. die ungefähre Entfernung des Objektes oder die räumliche Ausformung des Objektes. Vorzugsweise umfasst eine stereoskopische Bildaufnahme die Aufnahme zweier Bilder, welche vorzugsweise von unterschiedlichen, insbesondere benachbarten Orten aufgenommen wird. Die benachbarten Orte können insbesondere dadurch realisiert werden, dass zwei Objektive umfasst sind. Diese können beispielsweise zum Teil durch zwei Aufnahmehologramme realisiert werden oder ein Aufnahmehologramm mit zwei Aufnahmebereichen realisiert werden. Dabei kann es bevorzugt sein, diese Bilder gleichzeitig aufzunehmen, wozu bevorzugt zwei Bildsensoren verwendet werden. Es kann jedoch auch bevorzugt sein, die Bildaufnahmen von zwei unterschiedlichen Orten in hoher Frequenz alternierend aufzunehmen, beispielsweise mit nur einem Bildsensor. Eine hohe Frequenz kann bspw. eine Frequenz von mindestens 50 Hz umfassen und sollte insbesondere so gewählt werden, dass eine aufzunehmende Person, welche sich bewegt, für die hier vorgesehenen Zwecke als im Wesentlichen ruhend für zwei alternierende Aufnahmen angesehen werden kann. Dies kann beispielsweise durch einen verstellbaren Polarisationsfilter realisiert werden, welcher mit der entsprechenden Frequenz geschaltet wird, wobei die für die jeweiligen Aufnahmen verwendeten Hologramme vorzugsweise entsprechende Polarisationen aufweisen, welche durch den Filter gefiltert werden können.

Es kann jedoch auch bevorzugt sein, dass die verschiedenen Aufnahmeperspektiven für eine stereoskopische Bildaufnahme dadurch realisiert werden, dass nur eine Kamera und/oder ein Aufnahmehologramm verwendet wird, jedoch die aufzunehmende Person sich bewegen muss, beispielsweise für eine Gesichtserkennung den Kopf einmal nach links und/oder einmal nach rechts wenden muss, um die verschiedenen Perspektiven in einer relativ kurzen zeitlichen Abfolge zu realisieren. Dies könnte eine besonders einfache Realisierung einer stereoskopischen Bildaufnahme darstellen, die jedoch bei der Sicherheit gegenüber der gleichzeitigen Aufnahme der Person von verschiedenen Perspektiven Abstriche erfordert. Wenn die Folge der Bildaufnahmen ausreichend hoch ist, kann jedoch auch hier eine hohe Sicherheit realisiert werden.

Eine Bildaufnahme kann vorzugsweise aus einem einzigen Bild bestehen, kann jedoch bevorzugt auch aus einer Serie von Bildern und insbesondere einer Videoaufnahme, welche bewegte Bilder abbilden, bestehen.

Ein typischer Abstand zwischen benachbarten Orten, aus denen heraus die stereoskopische Bildaufnahme getätigt wird, kann in etwa dem Augenabstand entsprechen und beispielsweise zwischen 50 und 80 Millimetern (mm) betragen. Es können aber auch andere Abstände, vorzugsweise in einem Bereich zwischen 10 mm und 1 Meter (m) verwendet werden.

Insbesondere kann durch eine stereoskopische Aufnahme unterschieden werden, ob die bei der Bildaufnahme festgestellten Strukturen dreidimensional ausgebildet sind, also beispielsweise unterschiedliche Entfernungen zum Betrachter aufweisen oder lediglich zweidimensionale Strukturen innerhalb einer Ebene. So kann bspw. zwischen dem Foto eines Gesichtes und einem tatsächlichen Gesicht mit einer dreidimensionalen Oberfläche unterschieden werden.

Vorzugsweise ist die stereoskopische Bildaufnahme darauf ausgerichtet, Personen aufgrund ihrer erkennbaren Merkmale, insbesondere ihrer Gesichtsmerkmale, zu unterscheiden oder anhand bestimmter Eigenschaften zu kategorisieren und dabei insbesondere auf dreidimensionale Merkmale abzustellen. Insbesondere ist die stereoskopische Bildaufnahme geeignet für eine dreidimensionale Gesichtserkennung, eine Bewegungserkennung und/oder Iriserkennung.

Eine Bewegungserkennung kann für sich genommen oder zusätzlich zu einer Gesichtserkennung und/oder einer Iriserkennung vorgenommen werden und beispielsweise bestimmte vorgegebenen Bewegungen umfassen, welche auch nutzerspezifisch und/oder individualisierbar sind. Beispielsweise kann bevorzugt sein, dass eine Fahrzeugtür oder eine Haustür nur durch eine bestimmte Bewegung, insbesondere eine Tanzbewegung, welche ein Nutzer dem System vorzugsweise vorgegeben hat, geöffnet werden.

Auch bei einer Iriserkennung kann vorzugsweise eine stereoskopische Bildaufnahme die Sicherheit bei der Autorisierungskontrolle erhöhen, insbesondere durch die unterschiedlichen Betrachtungswinkel. Dadurch können beispielsweise Abschattungen durch den Rahmen einer Brille bei Brillenträgern besser kompensiert werden.

Vorzugsweise kann durch die mindestens eine holographische Kamera für die stereoskopische Bildaufnahme neben einer stereoskopischen Bildaufnahme auch "normale", nicht stereoskopische Aufnahmen getätigt werden. So kann bspw. eine Gesichtserkennung dreidimensional und zusätzlich durch mindestens eine Kamera eine Iriserkennung zweidimensional durchgeführt werden. So kann die Sicherheit weiter erhöht werden.

Es kann auch bevorzugt sein, bestimmte Objekte zur erkennen. Dies kann vorzugsweise auch von der personengebundenen Autorisierungskontrolle umfasst sein. Eine Objekterkennung kann vorzugsweise durch eine stereoskopische Bildaufnahme verbessert werden. Beispielsweise kann ein in einen Tankdeckel integriertes System erkennen, ob der Tankrüssel für den richtigen Kraftstoff verwendet wird, z. B. Diesel oder Super-Benzin.

Eine Steuerungseinrichtung ist insbesondere mindestens ein integrierter Schaltkreis, z. B. mindestens ein Mikroprozessor, mindestens einen Prozessor oder Prozessoreinheit, mindestens eine CPU, mindestens ein Rechner und/oder mindestens ein Computer. Eine Steuerungseinrichtung kann bspw. eine anwendungsspezifische integrierte Schaltung (ASIC), ein Programmable Logic Device (PLD) oder ein Field Programmable Gate Array (FPGA) umfassen. Des Weiteren können dem Fachmann in diesem Zusammenhang bekannte Bauteile wie mindestens ein integrierter Schaltkreis, mindestens ein Digital-Analog-Wandler, mindestens ein Analog-Digitalwandler und/oder mindestens ein Verstärker umfasst sein.

Die holographische Kamera weist mindestens ein von dem Basiskörper umfasstes Aufnahmehologramm zur Umlenkung von Lichtstrahlen aus dem Detektionsbereich auf. Das Aufnahmehologramm ist vorzugsweise geeignet zur Umlenkung zumindest eines Teils der Lichtstrahlen aus dem Detektionsbereich, so dass diese zur Bildaufnahme herangezogen werden können. Bspw. können die Lichtstrahlen auf einen Detektor, z. B. in Form eine Bildsensors, umgelenkt werden.

Das Aufnahmehologramm ist bevorzugt eine diffraktive Struktur. Bevorzugt kann holographisch und diffraktiv bzw. Hologramm und diffraktives Element in diesem Dokument synonym verwendet werden.

Das Aufnahmehologramm beugt bevorzugt zumindest einen Teil des Lichtes aus dem Detektionsbereich dergestalt, dass das Licht für eine Bildaufnahme umgelenkt wird. Das Aufnahmehologramm kann dabei mehrere Hologramme, z. B. mindestens zwei, umfassen. Es kann ein gemeinsames Hologramm umfasst sein, welches eingerichtet ist, das Licht von zwei beanstandeten Orten aus für die zwei für die Stereoskopie benötigten Aufnahmen aufzunehmen. Bevorzugt kann es sich dabei jedoch auch um zwei separate Aufnahmehologramme handeln.

Das Aufnahmehologramm kann vorzugsweise als Analogon eines Objektives oder eines Teils eines Objektives einer "klassischen" Kamera angesehen werden, wobei das Aufnahmehologramm das aufzunehmende Licht aufsammelt und/oder umlenkt. Es kann bevorzugt sein, dass das Aufnahmehologramm dabei auch strahlformende Eigenschaften aufweist.

Der Detektionsbereich kann bevorzugt je nach spezifischer Anwendung des Systems entsprechend gewählt werden, z. B. bei der Herstellung des Hologramms. Wird das System beispielsweise in eine Seitentür eines PKWs integriert und handelt es sich bei der funktionalisierten Scheibe um dessen Seitenscheibe, die bevorzugt den Basiskörper umfasst, dann kann der Detektionsbereich vorzugsweise so gewählt werden, dass das Gesicht einer durchschnittlich großen Person, die in einem Abstand zur Seitentür steht, welcher geeignet ist, um die Seitentür von dieser Position aus manuell zu öffnen (z. B. in einem Abstand kleiner 1 Meter (m), bevorzugt kleiner 0,6 m zur Seitentür), durch das Aufnahmehologramm umgelenkt wird. Der Detektionsbereich ist ein bevorzugt ausreichend großes Volumen, dass die Gesichter verschieden großer Personen in einem praktikabel großen Abstandsbereich zum Basiskörper für eine personengebundene Autorisierungskontrolle herangezogen werden können. Dabei kann zum einen das Aufnahmehologramm Licht aus einem ausreichend großen Winkelbereich bzw. Winkelspektrum umlenken, zum anderen kann die Steuerungseinrichtung durch geeignete Nachbearbeitung der aus der Bildaufnahme stammenden Daten ebenfalls einen Beitrag leisten, den Detektionsbereich bei Bedarf zu vergrößern, indem Verzerrungen, Unschärfen oder andere optische Effekte bei der Autorisierungskontrolle berücksichtigt werden.

Der Detektionsbereich ist vorzugsweise der Bereich, aus dem die von einem zu detektierenden Objekt kommende und auf die Vorderseite und/oder Rückseite des Basiskörpers treffende Strahlung kommt. Das Aufnahmehologramm kann insbesondere eingerichtet sein, senkrecht auf den Basiskörper treffende Strahlung abzulenken. Es kann jedoch auch für andere Winkel optimiert sein, wenn beispielsweise der gewünschte Detektionsbereich oberhalb, unterhalb und/oder seitlich versetzt liegt und/oder die Scheibe, die den Basiskörper umfasst, schräg angeordnet ist. Das Aufnahmehologramm kann ebenfalls eine strahlformende Funktion aufweisen, bspw. eine kollimierende Funktion und/oder kann die Krümmung einer Scheibe, welche den Basiskörper umfasst, berücksichtigen.

Das Aufnahmehologramm ist vorzugsweise im Wesentlichen oder zumindest teilweise transparent, so dass der Basiskörper an der Stelle, wo das Hologramm angeordnet ist, im Wesentlichen oder zumindest teilweise transparent ist.

Vorzugsweise lenkt das Aufnahmehologramm Licht aus zumindest einem Spektralbereich ab. Der Spektralbereich kann dabei schmal sein, bspw. umgerechnet in die Wellenlänge in der Größenordnung 1 Nanometer (nm), eher kann aber auch in der Größenordnung 10 nm oder 100 nm oder mehr liegen.

Begriffe wie im Wesentlichen, ungefähr, etwa, ca. etc. beschreiben bevorzugt einen Toleranzbereich von weniger als ± 20%, bevorzugt weniger als ± 10 %, noch stärker bevorzugt weniger als ± 5% und insbesondere weniger als ± 1%. Angaben von im Wesentlichen, ungefähr, etwa, ca. etc. offenbaren und umfassen stets auch den exakten genannten Wert.

Das Aufnahmehologramm kann zur Umlenkung verschiedener Winkelspektren und/oder Spektralbereiche eingerichtet sein. Beispielsweise kann das Aufnahmehologramm mehrere Hologramme umfassen, welche jeweils ein Winkelspektrum und/oder einen Spektralbereich umlenken. Diese Hologramme können übereinander, insbesondere stapelweise übereinander, in einem sogenannten Stack angeordnet sein.

In einer alternativen Ausgestaltung liegen die den jeweiligen Winkelspektren und/oder Spektralbereichen zugeordneten Hologrammkomponenten in einem einzigen Aufnahmehologramm vor, insbesondere in einer sogenannten Hologrammfolie, in der sie gemeinsam belichtet wurden. Ein solches Aufnahmehologramm wird vorzugsweise auch als sogenanntes Multiplexhologramm bezeichnet.

Der Bereich, in dem sich das Aufnahmehologramm befindet, wird vorzugsweise auch als Einkoppelbereich bezeichnet und das Aufnahmehologramm als diffraktive Struktur. Dies ist insbesondere dann eine treffende Bezeichnung, wenn die Lichtstrahlung aus dem Detektionsbereich in den Basiskörper zur weiteren Lichtleitung innerhalb des Basiskörpers eingekoppelt wird.

Die Transparenz des Aufnahmehologramms und/oder des Einkoppelbereiches ist dabei bevorzugt von der Effizienz der Strahlungseinkopplung und/oder der Effizienz der Umlenkung der Lichtstrahlen abhängig. Mit steigender Einkopplungseffizienz und/oder Umlenkeffizienz sinkt auch die Transparenz im Einkoppelbereich und/oder des Aufnahmehologramms.

Im Sinne einer größtmöglichen Transparenz kann die Umlenkung und/oder Strahlungseinkopplung durch z.B. die diffraktive Struktur (insbesondere das mindestens eine Volumenhologramm) gerade so effizient sein, dass eine ausreichende Strahlungsleistung auf den Auskoppelbereich trifft. Der teiltransparente Einkoppelbereich kann so ausgebildet sein, dass die Einkoppeleffizienz und/oder die Umlenkeffizienz z.B. 2%, 5%, 10%, 15%, 20%, 25%, 30%, 35%, 40%, 45% oder 50% beträgt Diese Effizienz ist vorzugsweise bezogen auf den Teil des Spektrums, welches durch das Aufnahmehologramm umgelenkt wird. Sie kann jedoch ebenso bezogen sein auf das gesamte sichtbare Frequenzspektrum des Lichtes. Insbesondere kann die Einkoppeleffizienz im Bereich von 2% -50% liegen, so dass die Transparenz des Einkoppelbereiches im Bereich von 50% - 98% liegt.

Holographisch wird in diesem Dokument vorzugsweise synonym mit diffraktiv verwendet. Insbesondere kennzeichnet ein holographisches Element, bspw. ein Hologramm, die Herstellungsweise mittels einer an die gewünschte Beugung angepasste Belichtung, z. B. mit einer entsprechenden Referenz- und Objektwelle. Auch computergenerierte Hologramme können vorzugsweise umfasst sein, deren computerunterstütze Berechnung auf holographischen Prinzipien basiert.

Die Kamera und die Steuerungseinrichtung sind eingerichtet für eine personengebundene Autorisierungskontrolle einer durch die stereoskopische Bildaufnahme aufgenommenen Person. Eine personengebundene Autorisierungskontrolle ist vorzugsweise eine Autorisierungskontrolle, die einer Autorisierung ermöglicht, die mithilfe der zu autorisierenden Person selbst und deren Eigenschaften durchgeführt werden kann. Kontrolle bedeutet vorzugsweise eine Überprüfung, ob eine Autorisierung vorliegt. Die Person braucht hierzu vorzugsweise keinen mitgeführten Gegenstand, wie etwa einen Schlüssel oder ein Dokument zur Identifikation.

Dass die Kamera und die Steuerungseinrichtung eingerichtet sind für eine personengebundene Autorisierungskontrolle wie hier beschrieben bedeutet, dass entsprechende, für den Fachmann bekannte Mittel vorhanden sind, um diese Kontrolle durchzuführen. Z. B. kann die Kamera ein bevorzugt elektrisches Ausgangssignal liefern, welches der Steuerungseinrichtung zugeführt wird, bspw. über Signalleitungen. Die Steuerungseinrichtung weist dann entsprechende Mittel auf, z. B. mindestens einen Prozessor und mindestens einen Datenspeicher, mit deren Hilfe die Kontrolle durchgeführt wird. Hierfür kann beispielsweise ein entsprechender Algorithmus verwendet werden, welcher durch die Steuerungseinheit implementiert wird, bspw. ein Erkennungsalgorithmus.

Die personengebundene Autorisierungskontrolle wird dabei vorzugsweise anhand vorher erlernter und/oder vorgegebener Eigenschaften vorgenommen. Es kann beispielsweise einen Lernmodus geben, bei dem weitere Gesichter für eine Gesichtserkennung hinzugefügt werden.

Die personengebundene Autorisierungskontrolle beruht auf mindestens einer durch die stereoskopische Bildaufnahme feststellbaren Eigenschaft der Person. Eine durch die stereoskopische Bildaufnahme feststellbare Eigenschaft der Person kann eine zweidimensionale, in einer (zweidimensionalen) Ebene liegende Eigenschaft sein und insbesondere eine dreidimensionale Eigenschaft der Person. Insbesondere kann die Eigenschaft der Person deren Gesichtszüge umfassen.

Die Autorisierungskontrolle wird vorzugsweise auch als Authentifikation bezeichnet, wobei die Autorisierung auch als Authentifizierung bezeichnet wird.

Bevorzugt umfasst die hier beschriebene Autorisierungskontrolle eine Gesichtserkennung, insbesondere eine 3D-Gesichtserkennung.

Beispielsweise können insbesondere durch die Steuerungseinrichtung und den durch diesen implementierten Algorithmus folgende Schritte realisiert werden:
- Erkennen und Extrahieren des Gesichtsbildes vom Bildhintergrund.
- Ausrichten des Gesichtsbildes, um z. B. Gesichtsposition, Bildgröße und weitere Bildeigenschaften, wie bspw. Beleuchtung und Graustufen, zu berücksichtigen. Hierdurch wird vorzugsweise die Lokalisierung von Gesichtsmerkmalen erleichtert.
- Lokalisierung von Gesichtsmerkmalen (Gesichtsmerkmalsextraktion). Die Gesichtsmerkmale umfassen vorzugsweise Augen, Nase und/oder Mund. Die Gesichtsmerkmale werden dabei vorzugsweise im Bild lokalisiert und gemessen, um das Gesicht darzustellen und einen sogenannten Merkmalsvektor des Gesichts zu ermitteln.
- Abgleichen der Gesichtsmerkmale und/oder des Merkmalsvektors mit bekannten Gesichtern, Gesichtsmerkmalen und/oder Merkmalsvektoren, welche z. B. in einer Datenbank gespeichert vorliegen.

Im Folgenden nur einige bevorzugte Algorithmen zur Gesichtserkennung (Erkennungsalgorithmen):
- Identifikation von Gesichtsmerkmalen durch Extraktion von Orientierungspunkten und/oder Merkmalen aus einem Gesichtsbild, bspw. Analyse der relativen Position, Größe und/oder Form der Augen, der Nase, der Wangenknochen und/oder des Kiefers analysieren und Verwendung dieser Merkmale zur Suche nach Gesichtsbildern mit passenden Merkmalen
- Normalisieren einer Galerie von Gesichtsbildern, komprimieren der Gesichtsdaten, wobei nur für die Gesichtserkennung nützliche Daten im Bild gespeichert werden und vergleichen eines spezifischen Gesichtsbildes mit den Gesichtsdaten. Beispielsweise kann der Algorithmus auf Template-Matching-Techniken beruhen, welche dem Fachmann bekannt sind.

Erkennungsalgorithmen können bspw. geometrischen Erkennungsalgorithmen umfassen. Solche befassen sich vorzugsweise mit Gesichtsmerkmalen wie beschrieben.

Erkennungsalgorithmen können ebenfalls fotometrischen Erkennungsalgorithmen umfassen. Diese umfassen bevorzugt einen statistischen Ansatz, wobei das Bild vorteilhafterweise in Werte unterteilt wird und die Werte mit Vorlagen verglichen werden zur Eliminierung/Feststellung von Abweichungen.

Erkennungsalgorithmen können ebenfalls holistische Erkennungsalgorithmen umfassen, bei denen das Gesicht vorzugsweise in seiner Gesamtheit zu erkennen sein soll.

Erkennungsalgorithmen können ebenfalls merkmalsbasierte Erkennungsalgorithmen umfassen. Diese unterteilen vorzugsweise das Gesicht in Komponenten und/oder Merkmale und analysieren diese sowie vorzugsweise ihre räumliche Lage zueinander.

Der mindestens eine Erkennungsalgorithmus umfasst vorzugsweise mindestens einen Algorithmus ausgesucht aus der Gruppe umfassend Hauptkomponentenanalyse unter Verwendung von Eigengesichtern, lineare Diskriminanzanalyse, Elastic-Bunch-Graph-Matching unter Verwendung des Fisherface-Algorithmus, Hidden-Markov-Modell, multilineares Unterraumlernen unter Verwendung der Tensordarstellung und/oder neuronal motiviertes dynamisches Link-Matching.

Es kann vorzugsweise ein sogenannter Gesichtshalluzinationsalgorithmus umfasst sein. Diese können vorteilhafterweise die Gesichtserkennung in Umgebungen mit einem hohen Signal-Rausch-Verhältnis erleichtern und vorzugsweise vor der Anwendung des eigentlichen Erkennungsalgorithmus zum Einsatz kommen. Solch ein Algorithmus verwendet bevorzugt beispielbasiertes maschinelles Lernen mit Pixelsubstitution und/oder Indizes für die Verteilung der nächsten Nachbarn. Hierbei können vorzugsweise demografische und/oder altersbezogene Gesichtsmerkmale einbezogen werden. Vorteilhaftweise kann bei Verwendung entsprechender Trainingsdaten durch den Einsatz solcher Algorithmen auch ein teilweise bedecktes Gesicht erkannt werden.

Eine hier bevorzugte, dreidimensionale Gesichtserkennung basiert vorzugsweise auf Bildaufnahmen, welche Informationen über die Form eines Gesichts umfassen, insbesondere eine stereoskopische Bildaufnahme. Diese Informationen können beispielsweise verwendet werden, um markante Gesichtsmerkmale, insbesondere auf der Oberfläche des Gesichts, zu erkennen und/oder zu identifizieren, wie z. B. die Kontur von Augenhöhlen, Nase und/oder Kinn. Vorteilhafterweise wird eine 3D-Gesichtserkennung nicht von Änderungen der Beleuchtung beeinflusst. Ein Gesicht kann des Weiteren vorteilhafterweise aus unterschiedlichen Blickwinkeln identifizieren, wie z. B. einer Profilansicht und die Präzision der Gesichtserkennung kann verbessert werden. Für die 3D-Gesichtserkennung können vorzugsweise Matching-Techniken verwendet werden, insbesondere eine metrische Geometrie, um bspw. Ausdrücke als Isometrien zu behandeln.

Durch eine 3D-Gesichtserkennung kann insbesondere verhindert werden, dass eine Autorisierungskontrolle durch ein zweidimensionales Foto des Gesichts einer Person anstatt des tatsächlichen Gesichts der Person getäuscht werden kann.

Autorisierung bedeutet vorzugsweise eine Einräumung von Rechten aufgrund einer positiven verlaufenen Überprüfung vorher festgelegter Kriterien. Diese Kriterien können bspw. eine oder mehrere Personenidentitäten betreffen, die Zugehörigkeit zu einer Personengruppe und/oder das Vorhandensein, das Mitführen und/oder das Benutzen eines bestimmten Objektes. Eine personengebundene Autorisierung umfasst bevorzugt eine Autorisierung aufgrund einer oder mehrerer Personenidentitäten und/oder der Zugehörigkeit zu einer Personengruppe. Eine Einräumung von Rechten bedeutet in diesem Zusammenhang insbesondere, eine zumindest teilweise Einräumung des Rechts zum Öffnen der Tür. Ein zumindest teilweises Recht bedeutet in diesem Zusammenhang, dass das Recht zum Öffnen auch auf mehr als einer Autorisierung beruhen kann, wobei die personengebundene Autorisierung eine von diesen mehreren Autorisierungen ist. Eine personengebundene Autorisierung kann insbesondere erfolgen, wenn sich das Gesicht einer berechtigten (bevorzugt autorisierten) Person im Detektionsbereich befindet und aufgrund mindestens einer durch die stereoskopische Bildaufnahme feststellbaren Eigenschaft der Person, insbesondere in deren Gesicht, erkannt wird.

Die Steuerungseinrichtung ist dabei eingerichtet, ein Entriegelungssignal für ein Öffnen der Tür bei mindestens einer personengebundenen Autorisierung auszugeben. Das Entriegelungssignal ist insbesondere ein Signal, welches dann an eine Schließkomponente ausgegeben werden kann und aufgrund dessen der Schließkomponente eine Entriegelung der Tür vornehmen kann. Ein Entriegelungssignal kann beispielsweise ein elektrisches Signal und/oder ein optisches Signal umfassen. Somit wird durch die Steuerungseinheit nach einer Autorisierung, also vorzugsweise einer entsprechenden Einräumung von Rechten, auch faktisch als Konsequenz ein entsprechendes Signal ausgegeben, welches in Kombination mit weiteren Elementen das Öffnen der Tür ermöglichen kann und somit der zunächst nur theoretischen Einräumung von Rechten eine faktische Konsequenz folgen lassen kann.

Die Steuerungseinrichtung ist dabei insbesondere eingerichtet, ein Entriegelungssignal für ein Öffnen der Tür nur bei mindestens einer personengebundenen Autorisierung auszugeben und ansonsten nicht.

Die Steuerungseinrichtung kann vorzugsweise weiterhin dazu eingerichtet sein, ein Verschlusssignal für ein Verschließen der Tür auszugeben oder weiterhin auszugeben, wenn keine personengebundene Autorisierung erfolgt.

Es kann bevorzugt sein, dass das System eingerichtet ist, gleichzeitig Licht, insbesondere strukturiertes Licht (bspw. ein Gittermuster zur Erleichterung einer Gesichtserkennung), bspw. im Infrarotbereich in den Detektionsbereich und insbesondere auf das Gesicht zu projizieren. Damit kann eine dreidimensionale Gesichtserkennung vorteilhafterweise verbessert werden. Die Projektion kann beispielsweise durch eine entsprechende Lichtquelle und ein vom Basiskörper umfasstes Projektionshologramm vorgenommen werden.

Das beschriebene System kann durch eine Autorisierungskontrolle, welche auf durch die stereoskopische Bildaufnahme feststellbaren Eigenschaft einer Person beruht, die Sicherheit und Zuverlässigkeit einer Autorisierungskontrolle erhöhen. Beispielsweise kann eine Autorisierung durch ein zweidimensionales Abbild der Eigenschaft einer Person vorteilhafterweise verhindert und somit Täuschungen vermieden werden. Außerdem kann die Autorisierung auch bei erschwerten optischen Bedingungen realisiert werden, weil durch die stereoskopische Aufnahme die Zuverlässigkeit erhöht werden kann, welche auch auf einer gewissen Datenredundanz und/oder auf einem erhöhten Informationsgehalts der Bildaufnahme aufgrund der unterschiedlichen Blickwinkel beruht. Gleichzeitig kann durch Verwendung der holographischen Kamera eine Bildaufnahme aus dem transparenten Basiskörper heraus vorgenommen werden. Hierdurch kann eine funktionalisierte Scheibe realisiert werden, welche neben der Möglichkeit der Durchsicht aufgrund der Transparenz eine Kamerafunktion realisieren kann. Es kann für die Bildaufnahme eine Aufnahmeposition realisiert werden, welche ansonsten nicht realisierbar ist, da eine Scheibe üblicherweise nicht auf diese Art funktionalisiert werden kann. Insbesondere bei der Anwendung in einigen Gebieten, bspw. für eine Autotür, ist die Aufnahmeposition aus der Seitenscheibe, welche vorteilhafterweise realisiert werden kann, ideal für eine personengebundene Autorisierungskontrolle, da eine Person, die eine Tür öffnen möchte, typischerweise bezüglich der Position innerhalb einer horizontalen Ebene eine Position vor dem Fenster der Türe einnimmt. Es kann ein direkter Blick durch eine transparente, unsichtbare Kamera aufgenommen werden. Die Kamera kann durch die hier beschriebene Realisierung "unsichtbar" realisiert werden und kann so einen zusätzlichen Sicherheitsaspekt bieten, indem beispielsweise auch Aufnahmen von Personen gemacht werden können, welche autorisiert versuchen, die Tür zu öffnen. Es kann bspw. durch die Holocam eine Art Türspion- und Überwachungs- Sicherheitsfunktion in den auswärtigen Raum realisiert werden. Auch aus ästhetischen Erwägungen kann diese "unsichtbare" Implementierung vorteilhaft sein. Auch kann die funktionalisierte Scheibe größer sein, weil kein zusätzlicher Platz für die Kamera geschaffen werden muss. So kann bspw. bei einem Fahrzeug die Sicherheit erhöht werden.

In einer weiteren bevorzugten Ausführungsform der Erfindung umfasst das System weiterhin ein erstes Kommunikationsmittel zum Senden und Empfangen von Signalen, wobei erstes Kommunikationsmittel und Steuerungseinrichtung eingerichtet sind für eine objektgebundene Autorisierungskontrolle eines zugeordneten, zweiten Kommunikationsmittels zum Senden und Empfangen von Signalen, insbesondere wenn dieses sich im Sende- und Empfangsbereich des ersten Kommunikationsmittels befindet. Dabei beruht die objektgebundene Autorisierungskontrolle auf einer Position und/oder Bewegung des zweiten Kommunikationsmittels in Bezug auf einen vorgegebenen Nahbereich des ersten Kommunikationsmittels sowie auf Eigenschaften von zwischen erstem und zweitem Kommunikationsmittel ausgetauschten Signalen, wobei die Steuerungseinrichtung eingerichtet ist, ein Entriegelungssignal für ein Öffnen der Tür bei der personengebundenen Autorisierung und einer objektgebundenen Autorisierung des zweiten Kommunikationsmittels auszugeben.

Die zu sendenden und zu empfangenden Signale können beispielsweise elektromagnetische Signale sein, insbesondere optische Signale, Infrarotsignale und/oder andere Signale für eine Drahtlosübertragung, z. B. Radiowellen, insbesondere Langwellen, Mittelwellen, Kurzwellen und Ultrakurzwellen, Radar- und/oder Mikrowellen.

Das erste Kommunikationsmittel zum Senden und Empfangen von Signalen kann beispielsweise einen Transceiver für Radiowellen und/oder optische Signale und/oder eine Drahtloskommunikationsschnittstelle umfassen. Es kann mindestens eine Antenne zum Senden und/oder Empfangen vor elektromagnetischen Signalen vom ersten Kommunikationsmittel umfasst sein. Des Weiteren können vom ersten Kommunikationsmittel dem Fachmann in diesem Zusammenhang bekannte Bauteile wie mindestens ein integrierter Schaltkreis, mindestens ein Digital-Analog-Wandler, mindestens ein Analog-Digitalwandler und/oder mindestens ein Verstärker umfasst sein.

Das zweite Kommunikationsmittel kann vorzugsweise ebenfalls die im Zusammenhang mit dem ersten Kommunikationsmittel genannten Komponenten umfassen.

Erstes und zweites Kommunikationsmittel können beispielsweise auf NFC- und/oder RFID-Technologien basieren.

Das erste Kommunikationsmittel und die Steuerungseinrichtung sind eingerichtet für eine objektgebundene Autorisierungskontrolle eines zugeordneten, zweiten Kommunikationsmittels zum Senden und Empfangen von Signalen.

Objektgebundene Autorisierungskontrolle bezeichnet vorzugsweise eine Autorisierungskontrolle, welche auf eine Kontrolle des Vorhandenseins, des Mitführens und/oder des Benutzens eines bestimmten, autorisierten Objektes beruht. Bei diesem Objekt kann es sich beispielsweise um einen Schlüssel handeln, welcher das zweite Kommunikationsmittel umfasst.

Bei dem zweiten Kommunikationsmittel handelt es sich vorzugsweise um mindestens ein zweites Kommunikationsmittel. Ein zugeordnetes, zweites Kommunikationsmittel zum Senden und Empfangen von Signalen ist vorzugsweise, geeignet, mit dem ersten Kommunikationsmittel zu kommunizieren und insbesondere dessen Signale zu empfangen und Signale an dieses zu senden. Das ist bevorzugt von dem Begriff zugeordnet umfasst. Zugeordnet bedeutet vorteilhafterweise weiterhin, dass es einer Vielzahl zweiter Kommunikationsmittel geben kann, welche geeignet sind, mit dem ersten Kommunikationsmittel zu kommunizieren und insbesondere dessen Signale zu empfangen und Signale an dieses zu senden, wobei jedoch nur eine Teilmenge zweiter Kommunikationsmittel, vorzugsweise weniger als 10, stärker bevorzugt weniger als 5 und insbesondere weniger als 3 zweite Kommunikationsmittel bei der Autorisierungskontrolle tatsächlich zu einer Autorisierung führen können. Diese werden auch als autorisierte zweite Kommunikationsmittel bezeichnet. Beispielsweise können mehrere Schlüssel ein zweites Kommunikationsmittel umfassen, welches Signale mit dem ersten Kommunikationsmittel austauscht, jedoch ist nur ein Schlüssel und ein Ersatzschlüssel zugeordnet in dem Sinne, dass sie zu einer objektgebundenen Autorisierung führen können.

Eine objektgebundene Autorisierung umfasst bevorzugt eine Autorisierung aufgrund des Vorhandenseins, des Mitführens und/oder des Benutzens eines bestimmten Objektes, z. B. eines zugeordneten Schlüssels.

Die objektgebundene Autorisierungskontrolle beruht auf einer Position und/oder Bewegung des zweiten Kommunikationsmittels in Bezug auf einen vorgegebenen Nahbereich des ersten Kommunikationsmittels sowie auf Eigenschaften von zwischen erstem und zweitem Kommunikationsmittel ausgetauschten Signalen. Die objektgebundene Autorisierungskontrolle umfasst daher vorzugsweise zwei Kontrollschritte: zum einen wird kontrolliert, ob sich das zweite Kommunikationsmittel (und bevorzugt das dieses umfassende Objekt) bspw. im vorgegebenen Nahbereich des ersten Kommunikationsmittels befindet. Zum zweiten wird aufgrund der ausgetauschten Signale vorzugsweise kontrolliert, ob das zweite Kommunikationsmittel das autorisierte zweite Kommunikationsmittel ist.

Ein vorgegebener Nahbereich ist vorzugsweise definiert als ein in Bezug auf das erste Kommunikationsmittel und/oder dessen Komponenten eindeutig definierbarer Raumbereich. Ein Raumbereich kann beispielsweise ein Volumen umfassen. In Bezug auf das erste Kommunikationsmittel heißt dabei bevorzugt in Bezug auf das erste Kommunikationsmittel, wenn es in einer Türe umfasst ist. Beispielsweise kann der Raumbereich eindeutig in Bezug auf die Tür und/oder das erste Kommunikationsmittel definiert sein bezüglich seiner Abmessungen in die verschiedenen Raumrichtungen ebenso wie auf den Bezugspunkt, von dem aus diese Abmessungen bestimmt werden. Es kann dabei vorzugsweise minimale und maximale Abmessungen geben. Der Bezugspunkt ist dabei vorzugsweise in Bezug auf das die Tür und/oder das erste Kommunikationsmittel eindeutig bestimmt. Beispielsweise kann das erste Kommunikationsmittel so eingerichtet und in der Tür verbaubar sein, dass sich der Nahbereich auf einer Seite der Tür befindet und eine gewissen "Box" oder einen gewissen Kugelausschnitt in Bezug auf einen von der Tür umfassten Bezugspunkt umfasst. Als Beispiel ist der Nahbereich so gewählt, dass er nur die Außenseite des Fahrzeugs gegenüber der Tür betrifft und mindestens einen Bereich mit einem Meter Abstand zur Außenseite der Tür umfasst sowie alle Raumbereiche, welche einen Meter Abstand zu den Außenkanten der Tür aufweisen. Sinnvollerweise soll der Nahbereich bevorzugt in Bezug auf eine Tür definiert werden, in der das System verbaut ist, jedoch ist dem Fachmann klar, dass auch dann der Nahbereich vorteilhafterweise letztendlich in Bezug auf das erste Kommunikationsmittel und dessen Komponenten definiert ist, weil diese in der Tür vorzugsweise fest verbaut sind. Es kann vorzugsweise auf das erste Kommunikationsmittel ein Bezugspunkt festgelegt werden, zu dem der Nahbereich vorgegeben wird. Ein vorgegebener Nahbereich des ersten Kommunikationsmittels ist dann vorzugsweise ein vorgegebener Nahbereich in Bezug auf diesen Bezugspunkt. Beispielsweise kann der Bezugspunkt der Anordnungspunkt der Sende- und/oder Empfangskomponente, bei mehreren umfassten Sende- und/oder Empfangskomponenten der geometrische Schwerpunkt der mehreren Sende- und/oder Empfangskomponenten sein.

Bevorzugt kann der Nahbereich in Bezug auf das erste Kommunikationsmittel isotrop angeordnet sein. Es kann ebenso bevorzugt werden, dass der Nahbereich in Bezug auf die von dem ersten Kommunikationsmittel aus gesehenen Richtungen jeweils unterschiedlich definiert ist. Beispielsweise kann der Nahbereich wie oben beschrieben einen von der Tür unterteilten Halbraum umfassen.

Bevorzugt ist der Nahbereich mindestens ein Nahbereich. Vorzugsweise können mehrere Nahbereiche umfasst sein, zwischen denen unterschieden werden kann. Ist die Tür beispielsweise eine Außentür, kann zwischen dem "hinter der Tür" liegenden Innenbereich und dem "vor der Tür" liegenden Außenbereich vorzugsweise unterschieden werden und bspw. eine Autorisierung nur in den einen Fall und nicht in dem anderen Fall vorgenommen werden. So kann beispielsweise je nach Ausführungsform ein Entriegelungssignal, eine holografische Anzeige und/oder die Holocam nur in einem Fall und nicht in dem anderen ausgegeben werden.

Eine objektgebundene Autorisierungskontrolle, welche auf einer Position des zweiten Kommunikationsmittels in Bezug auf den vorgegeben Nahbereich beruht, weist vorzugsweise als notwendiges Kriterium für die objektgebundene Autorisierung auf, dass sich das zweite Kommunikationsmittel innerhalb des vorgegebenen Nahbereichs befindet. Vorzugsweise beruht die objektgebundene Autorisierung also zumindest teilweise auf einer Position des zweiten Kommunikationsmittels innerhalb des vorgegebenen Nahbereichs des ersten Kommunikationsmittels. Dies kann bspw. aufgrund einer vorgegebenen Mindestsignalstärke zwischen erstem und zweitem Kommunikationsmittel und/oder eines auf den Signalen beruhenden Ortungsmechanismus, bspw. basierend auf Triangulation, realisiert werden.

Eine objektgebundene Autorisierungskontrolle, welche auf einer Bewegung des zweiten Kommunikationsmittels in Bezug auf den vorgegebenen Nahbereich beruht, kann bspw. als notwendiges Kriterium oder als zusätzliches notwendiges Kriterium aufweisen, dass das zweite Kommunikationsmittel eine Annäherung und/oder ein Sich-Entfernen in Bezug auf das erste Kommunikationsmittel und dessen Nahbereich vollzieht. Dies kann beispielsweise aufgrund einer zunehmenden und/oder abnehmenden Signalstärke zwischen erstem und zweitem Kommunikationsmittel festgestellt werden. Es kann ebenso bevorzugt sein, dass innerhalb des Nahbereichs bestimmte Bewegungsmuster des zweiten Kommunikationsmittels als notwendiges Kriterium für eine objektgebundene Autorisierung durchgeführt werden müssen. Beispielsweise können nutzerspezifische, individuelle Bewegungen durchgeführt werden, welche z. B. in einem Lernmodus dem System zuvor "beigebracht" wurden.

Die objektgebundene Autorisierungskontrolle beruht neben der Position und/oder der Bewegung des zweiten Kommunikationsmittels in Bezug auf einen vorgegebenen Nahbereich des ersten Kommunikationsmittels beruht außerdem auf Eigenschaften von zwischen erstem und zweitem Kommunikationsmittel ausgetauschten Signalen. Das bedeutet vorzugsweise, dass anhand der zwischen den beiden Kommunikationsmitteln ausgetauschten Signalen festgestellt werden kann, ob das zweite Kommunikationsmittel autorisiert ist. Dem Fachmann sind entsprechende Möglichkeiten zur Authentifikation bekannt, bspw. basierend auf einem zwischen erstem Kommunikationsmittel und zweitem Kommunikationsmittel geteilten Geheimnis und/oder kryptographischer Verschlüsselungs- und Authentifikationsmethoden.

Die Steuerungseinrichtung ist eingerichtet, ein Entriegelungssignal für ein Öffnen der Tür bei der personengebundenen Autorisierung und einer objektgebundenen Autorisierung des zweiten Kommunikationsmittels auszugeben. So kann die Sicherheit durch eine Zwei-Faktor-Autorisierung erhöht werden.

Im Folgenden wird ein mögliches Ausführungsbeispiel dieser Ausführungsform beschrieben. Das erste Kommunikationsmittel kann beispielsweise (z. B. von sich aus oder durch ein Ereignis getriggert) über mindestens eine Antenne ein kodiertes Anfragesignal, bspw. ein elektromagnetisches Signal, insbesondere mit einer LF-Frequenz von 125 bzw. 130 kHz aussenden, wobei das erste Kommunikationsmittel anschließend empfangsbereit ist, bspw. im UHF-Bereich (z. B. 433 MHz, 868 MHz und/oder 315 MHz). Dabei ist es bereit für den Empfang einer Bestätigung ausgesendet durch das zweite Kommunikationsmittel. Wenn das zweite Kommunikationsmittel in Reichweite ist, empfängt es das Signal, z. B. auf 125 kHz, dekodiert es und sendet dieses Signal anschließend mit einer neuen Kodierung wieder aus, z. B. im UHF-Frequenzband. Das so vom ersten Kommunikationsmittel empfangene Signal wird dann von diesem (und/oder der Steuerungseinrichtung) dekodiert, da erstes Kommunikationsmittel und zweites Kommunikationsmittel vorteilhafterweise eingerichtet sind, diese Kodierung vorzunehmen. Entsprechende Kodierungsverfahren sind dem Fachmann bekannt. Somit kann bevorzugt vom ersten Kommunikationsmittel das ursprünglich ausgesendete Signal mit dem vom zweiten Kommunikationsmittel empfangenen Signal verglichen werden. Gibt es innerhalb einer definierten Zeit keine Antwort, welches gewissen Vergleichskriterien standhält, wird kein Entriegelungssignal generiert. Bspw. schaltet das System dann (wieder) in einen Standbymodus. Stimmen jedoch die Signale überein bzw. halten diese gewissen Vergleichskriterien stand, bewirkt das vorzugsweise eine Autorisierung und ein Entriegelungssignal wird generiert.

In einer weiteren bevorzugten Ausführungsform der Erfindung ist die Steuerungseinrichtung eingerichtet, erst nach einer objektgebundenen Autorisierung eine personengebundene Autorisierungskontrolle zu ermöglichen. Dies ist eine besonders vorteilhafte Ausführungsform der Zwei-Faktor-Autorisierung, bei der zunächst die einfachere und weniger sichere objektgebundene Autorisierungskontrolle durchgeführt wird und dann die aufwendigere, energieintensivere und sichere personengebundene Autorisierungskontrolle. Dabei ist bevorzugt der vorgegebene Nahbereich größer und/oder weiter vom System und/oder von der Tür entfernt als der Detektionsbereich. Daher ist vorteilhafterweise auch von diesem Gesichtspunkt her diese Ausführungsform besonders effizient.

In einer weiteren bevorzugten Ausführungsform der Erfindung ist eine Schließkomponente umfasst, welche eingerichtet ist für ein Ver- oder Entriegelung der Tür, wobei die Schließkomponente eingerichtet ist für eine Entriegelung der Tür bei der Ausgabe des Entriegelungssignals durch die Steuerungseinrichtung. Eine Schließkomponente kann insbesondere ein Schloss für eine Tür und/oder einen verstellbaren Riegel für ein Türschloss umfassen. Der Riegel befindet sich vorzugsweise für eine Verriegelung in einem ausgefahrenen Zustand und kann für eine Entriegelung in einen eingefahrenen Zustand bewegt werden.

In einer weiteren bevorzugten Ausführungsform der Erfindung ist eine Bedienkomponente umfasst, welche eingerichtet ist für ein Bedienen der Tür durch die Person. Ein Bedienen der Tür bezeichnet bevorzugt ein Öffnen der Tür und/oder einen für ein Öffnen der Tür nötigen Teilschritt, insbesondere bei einer entriegelten Tür. Eine Bedienkomponente kann insbesondere einen Türgriff umfassen oder eine der Funktionalität eines Türgriffes entsprechende Komponente.

Der Fachmann weiß, dass auch sämtliche sinnvolle Kombination von hier beschriebenen Ausführungsformen umfasst sein können, bspw. eine Ausführungsform sowohl eine Bedienkomponente wie hier beschrieben als auch eine Schließkomponente wie hier beschrieben umfassen. Dies gilt selbstverständlich auch für andere hier beschriebene Aspekte der Erfindung.

In einer weiteren bevorzugten Ausführungsform der Erfindung ist die Bedienkomponente eingerichtet für eine Aktivierung der Bedienkomponente bei der Ausgabe des Entriegelungssignals durch die Steuerungseinrichtung. Eine Aktivierung der Bedienkomponente umfasst insbesondere einen Verfahrensschritt, welcher notwendig ist, um ein anschließendes Bedienen zu ermöglichen. Z. B. kann ein Türgriff bei einer Aktivierung freigegeben und/oder ausgefahren werden, um eine Bedienung zu ermöglichen. Wenn die Bedienkomponente ein Schalter ist, kann dieser ebenfalls bei einer Aktivierung freigegeben und/oder beleuchtet werden.

In einer weiteren bevorzugten Ausführungsform der Erfindung umfasst die Bedienkomponente einen Näherungs- und/oder Bewegungssensor auf Basis von Ultraschall, optischem Sensor einer Drahtloskommunikationsschnittstelle und/oder Radar. Hierdurch kann ein berührungsloses Bedienen durch eine Annäherung, eine Bewegung und/oder eine Geste realisiert werden. Vorzugsweise wird eine solche Bedienkomponente durch Ausgabe des Entriegelungssignals aktiviert, da nur dann eine Bedienung in Frage kommen soll, wenn eine Autorisierung stattgefunden hat. So kann eine berührungslose Bedienung realisiert werden.

In einer weiteren bevorzugten Ausführungsform der Erfindung umfasst die Bedienkomponente mindestens einen kapazitiven Sensor. Kapazitive Sensoren sind bspw. von Touchscreens bekannt und funktionieren besonders einfach und zuverlässig.

In einer weiteren bevorzugten Ausführungsform der Erfindung umfasst die Bedienkomponente eine holographisch basierte Bedienkomponente. Ein sogenannter holographischer Knopf beruht insbesondere auf dem Prinzip, dass ein Knopf durch Verwendung von Hologrammen dreidimensional und insbesondere losgelöst von einer Türoberfläche "schwebend" dargestellt werden kann und eine Geste innerhalb des dargestellten Bereichs ebenfalls durch ein entsprechendes Hologramm einem Detektor zugeführt und somit detektiert werden kann. So kann ebenfalls eine besonders intuitive berührungslose Bedienung der Bedienkomponente realisiert werden. Insbesondere kann die holographische Bedienkomponente durch mindestens ein Hologramm im transparenten Basiskörper realisiert werden. Die holographische Kamera kann bevorzugt ebenfalls zur Detektion einer Bediengeste verwendet werden.

In einer weiteren bevorzugten Ausführungsform der Erfindung umfasst das System weiterhin mindestens eine erste holographische Anzeige für eine an eine Person gerichtete Anzeige mindestens eines Bildes, bevorzugt in einem festgelegten Anzeigebereich gegenüber der Vorderseite und/oder der Rückseite des transparenten Basiskörpers.

Eine holographische Anzeige ist insbesondere eine Anzeige, welche unter Verwendung eines Hologramms, vor allem eines Anzeigehologramms erzeugt wird. Eine holographische Anzeige kann insbesondere einen dreidimensionalen Eindruck erwecken und/oder aufgrund der sehr individuell einstellbaren Beugungseigenschaften von Hologrammen sehr flexible Anzeigemöglichkeiten realisieren.

Vorzugsweise beschreibt der festgelegten Anzeigebereich einen räumlichen Bereich, in dem das Bild betrachtet werden soll.

Die holographische Anzeige kann vorzugsweise zur Anzeige des holographischen Bedienelementes, insbesondere des holographischen Knopfes, verwendet werden.

Der Anzeigebereich kann bevorzugt je nach spezifischer Anwendung des Systems entsprechend gewählt werden, z. B. bei der Herstellung des verwendeten Hologramms. Wird das System beispielsweise in eine Seitentür eines PKWs integriert und handelt es sich bei der funktionalisierten Scheibe um dessen Seitenscheibe, die bevorzugt den Basiskörper umfasst, dann kann der Anzeigebereich vorzugsweise so gewählt werden, dass er im Wesentlichen oder teilweise mit dem Detektionsbereich übereinstimmt. Es kann auch bevorzugt sein, dass der Detektionsbereich vom Anzeigebereich umfasst, wobei der Anzeigebereich größer ist. So kann beispielsweise durch die Anzeige im Anzeigenbereich angezeigt werden, wo sich der Detektionsbereich befindet. Der Anzeigebereich ist ein bevorzugt ausreichend großes Volumen, dass verschieden große Personen in einem praktikabel großen Abstandsbereich zum System und/oder der das System umfassenden Tür die Anzeige erkennen können. Der Anzeigebereich kann vorzugsweise auch als Eyebox bezeichnet werden.

Beispielsweise kann die Anzeige des Berechtigungsstatus in einer transparenten Fläche realisiert werden.

In einer weiteren bevorzugten Ausführungsform der Erfindung ist die erste holographische Anzeige oder mindestens eine zweite, umfasste holographische Anzeige eingerichtet, bei einer Beleuchtung aus einem Umgebungslicht des transparenten Basiskörpers die Anzeige zu erzeugen.

Es kann beispielsweise bevorzugt sein, dass die erste holographische Anzeige durch eine eigene Lichtquelle die Anzeige erzeugt, wobei die zweite holographische Anzeige die Anzeige durch Umgebungslicht erzeugt.

Umgebungslicht ist insbesondere natürliches und/oder künstliches Licht, welches aus der Umgebung des Systems und/oder der das System umfassenden Tür kommt unabhängig vom System vorhanden ist. Umgebungslicht kann beispielsweise Sonnenlicht umfassen und/oder Licht einer Straßenbeleuchtung. Umgebungslicht ist insbesondere Licht, welches nicht von einer vom System umfassten Lichtquelle kommt. Eine holographische Anzeige, welche aus Umgebungslicht erzeugt wird, wird vorzugsweise auch "passive" holographische Anzeige genannt, ein für die passive holographische Anzeige verwendetes Anzeigehologramm "passives" Anzeigehologramm.

Im Gegensatz wird dazu eine holographische Anzeige, welche durch Beleuchtung eines Hologramms durch eine Lichtquelle oder einen Bildgeber erzeugt wird, vorzugsweise aktives Hologramm genannt.

Ein passives Hologramm weist vorzugsweise im Vergleich zum aktiven Hologramm keinen festgelegten Anzeigebereich auf, da es durch die bevorzugt spektral breite und ein großes Winkelspektrum aufweisende Beleuchtung des Umgebungslichtes insbesondere nicht möglich ist, die Anzeige nur auf einen bestimmten Bereich zu beschränken. Eine solche holographische Anzeige ist besonders einfach zu realisieren, effizient und wartungsarm.

In einer weiteren bevorzugten Ausführungsform der Erfindung sind holographische Anzeige und Steuerungseinrichtung eingerichtet, die erste Anzeige des Bildes bei einem Signal durch einen vom System umfassten Näherungssensor zu erzeugen, wobei der Näherungssensor und die Steuerungseinrichtung eingerichtet sind, das Signal bei einer Detektion einer Person im Nahbereich des Systems und/oder der Tür zu erzeugen. Der Näherungssensor kann vorteilhaftweise wie vorstehend beschrieben realisiert werden.

Eine solche Anzeige kann beispielsweise erzeugt werden, wenn ein entsprechendes Hologramm und eine darauf abgestimmte Lichtquelle zur Beleuchtung des Hologramms umfasst ist, welche durch die Steuerungseinrichtung bei einer entsprechenden Detektion angesteuert wird, um die Anzeige durch Beleuchtung des Hologramms zu erzeugen. Dabei kann das Hologramm beispielsweise ein vom transparenten Basiskörper umfasstes Anzeigehologramm sein.

In einer weiteren bevorzugten Ausführungsform der Erfindung sind holographische Anzeige und Steuerungseinrichtung eingerichtet, die erste Anzeige des Bildes bei der objektgebundenen Autorisierung und/oder der personengebundenen Autorisierung zu erzeugen.

Eine solche Anzeige kann beispielsweise erzeugt werden, wenn ein entsprechendes Hologramm und eine darauf abgestimmte Lichtquelle zur Beleuchtung des Hologramms umfasst ist, welche durch die Steuerungseinrichtung bei einer entsprechenden Autorisierung angesteuert wird, um die Anzeige durch Beleuchtung des Hologramms zu erzeugen. Dabei kann das Hologramm beispielsweise ein vom transparenten Basiskörper umfasstes Anzeigehologramm sein.

Ein Anzeigehologramm weist vorzugsweise die anzuzeigenden Bildinformationen auf. Diese können insbesondere durch Beugung und/oder Umlenkung geeigneter Lichtstrahlen ein reelles und/oder virtuelles Bild erzeugen. Das Anzeigehologramm kann zur Umlenkung verschiedener Winkelspektren und/oder Spektralbereiche eingerichtet sein. Beispielsweise kann das Anzeigehologramm mehrere Hologramme umfassen, welche jeweils ein Winkelspektrum und/oder einen Spektralbereich umlenken. Diese Hologramme können übereinander, insbesondere stapelweise übereinander, in einem sogenannten Stack angeordnet sein.

In einer alternativen Ausgestaltung liegen die den jeweiligen Winkelspektren und/oder Spektralbereichen zugeordneten Hologrammkomponenten in einem einzigen Anzeigehologramm vor, insbesondere in einer sogenannten Hologrammfolie, in der sie gemeinsam belichtet wurden. Ein solches Anzeigehologramm wird vorzugsweise auch als sogenanntes Multiplexhologramm bezeichnet.

Solche Anzeigehologramme können beispielsweise auch mehrfarbige Bilder erzeugen, welche je nach Beleuchtung beispielsweise gleichzeitig, abhängig von der jeweiligen Beleuchtungsfarbe und/oder dem jeweiligen Betrachtungswinkel entstehen.

Eine bei einer objektgebundenen Autorisierung erzeugte Anzeige kann beispielsweise den Detektionsbereich für die personengebundene Autorisierungskontrolle anzeigen.

Eine bei einer personengebundenen oder personengebundenen und objektgebundenen Autorisierung erzeugte Anzeige kann beispielsweise einen Bedienbereich der Bedienkomponente anzeigen.

So kann eine erleichterte Bedienbarkeit des Systems erzielt werden.

In einer weiteren bevorzugten Ausführungsform der Erfindung umfasst das System eine Lichtquelle zur Beleuchtung mindestens eines von dem transparenten Basiskörper umfasstes erstes Anzeigehologramm für die erste Anzeige bei Eingang eines Anzeigesignals, wobei die Steuerungseinrichtung eingerichtet ist, das Anzeigesignal bei der objektgebundenen Autorisierung, der personengebundenen Autorisierung und/oder bei einer Detektion einer Person im Nahbereich des Systems und/oder der Tür an die Lichtquelle auszugeben und wobei das Anzeigehologramm und die Lichtquelle eingerichtet sind für die Erzeugung der Anzeige des Bildes bei der Beleuchtung, bevorzugt des Anzeigehologramms, durch die Lichtquelle.

Eine Lichtquelle kann beispielsweise eine LED und/oder einen Laser umfassen. Das erste Anzeigehologramm weist dabei die anzuzeigenden Bildinformationen auf, welche bei einer entsprechend abgestimmten Beleuchtung die Anzeige des Bildes erzeugen. Dabei ist die Lichtquelle insbesondere eine solche abgestimmte Beleuchtung. Abgestimmt kann sich dabei beispielsweise beziehen auf das Frequenzspektrum, das Winkelspektrum und der Schwerpunktswinkel, unter dem die Beleuchtung stattfindet und/oder die Kohärenz des Lichtes (räumlich und/oder zeitlich).

Dass das Anzeigehologramm und die Lichtquelle eingerichtet sind für die Erzeugung der Anzeige des Bildes bei der Beleuchtung durch die Lichtquelle bedeutet vorzugsweise zum einen, dass die Lichtquelle eine abgestimmte Beleuchtung umfasst und zum anderen, dass Lichtquelle und Anzeigenhologramm derart gestaltet und zueinander positioniert sind, dass die Lichtquelle das Anzeigenhologramm zumindest teilweise entsprechend beleuchten kann. Dabei kann die Lichtquelle vorzugsweise eine strahlformende Komponente aufweisen, bspw. eine Linse, um z. B. die emittierten Lichtstrahlen entsprechend zu kollimieren. Des Weiteren bedeutet dies, dass Lichtquelle und Anzeigehologramm aufeinander abgestimmt sind bezüglich Winkelspektrum der auf das Anzeigehologramm auftreffenden Lichtstrahlen, Schwerpunktswinkel der auf das Anzeigehologramm auftreffenden Lichtstrahlen, Frequenzspektrum der auf das Anzeigehologramm auftreffenden Lichtstrahlen und/oder Kohärenz der auf das Anzeigehologramm auftreffenden Lichtstrahlen. So können die vom Bildgeber erzeugten Bildinformationen besonders vorteilhaft durch das Anzeigehologramm angezeigt werden.

Ein Anzeigesignal ist bevorzugt ein Signal, welches bewirkt, dass die Lichtquelle eingeschaltet wird. Es kann sich insbesondere um ein elektrisches Signal handeln.

Die Lichtquelle kann vorzugsweise mehrere LEDs und/oder Laser umfassen, um Anzeigen in verschiedenen Helligkeiten und/oder Farben zu erzeugen. Das Anzeigesignal kann dabei beispielsweise mehrere Anzeigesignale umfassen, welche bevorzugt gezielt unabhängig voneinander erzeugt werden können, um bspw. eine animierte Anzeige zu erreichen.

In einer weiteren bevorzugten Ausführungsform der Erfindung umfasst das System einen Bildgeber zur Erzeugung mindestens eines projizierbaren Bildes bei Eingang eines Bildgebersignals und mindestens ein von dem transparenten Basiskörper umfasstes Projektionshologramm für die erste Anzeige, wobei die Steuerungseinrichtung eingerichtet ist, das Bildgebersignal bei der objektgebundenen Autorisierung und/oder der personengebundenen Autorisierung an den Bildgeber auszugeben und wobei das Projektionshologramm und der Bildgeber eingerichtet sind für die Erzeugung der Anzeige des Bildes, insbesondere bei der Erzeugung des projizierbaren Bildes durch den Bildgeber.

Ein Bildgeber zur Erzeugung mindestens eines projizierbaren Bildes ist eine Komponente, welche vorzugsweise die in dem anzuzeigenden Bild enthaltenen Bildinformationen selbst erzeugt. Die Bildinformationen können dabei in Form von Lichtstrahlen zum Projektionshologramm geleitet werden, wo dann das anzuzeigende Bild vorzugsweise als reelles und/oder virtuelles Bild, welches aus dem Anzeigebereiche aus sichtbar ist, erzeugt wird. Der Bildgeber kann beispielsweise eine bildgebende Einheit (picture generating unit - PGU) und/oder einen (Video-) Projektor umfassen und eine Projektions- und/oder Bildvorlage, mindestens eine Lichtquelle zur Beleuchtung der Vorlage und/oder mindestens eine strahlformende Komponente, z. B. eine Linse umfassen. Es kann sich auch um einen Laserprojektor handeln, welcher bevorzugt keine Bildvorlage benötigt, sondern das Bild durch gezielte Steuerung mindestens eines Laserstrahls erzeugt.

Der Bildgeber generiert die durch das Projektionshologramm anzeigbaren Bildinformationen insbesondere bei Eingang eines Bildgebersignals. Ein Bildgebersignal kann insbesondere ein elektromagnetisches Signal umfassen. Das Bildgebersignal kann die zu generierenden Bildinformationen vorzugsweise umfassen, welche dann vom Bildgeber generiert werden.

Das mindestens eine von dem transparenten Basiskörper umfasste Projektionshologramm für die erste Anzeige ist insbesondere eine Diffusorfläche, auf die die Bildinformationen vorzugsweise analog zu einer "klassischen" Leinwand projiziert bzw. übertragen werden, damit ein reelles und/oder virtuelles Bild von Anzeigebereich aus betrachtbar wird.

Die Steuerungseinrichtung ist eingerichtet, das Bildgebersignal bei der objektgebundenen Autorisierung und/oder der personengebundenen Autorisierung an den Bildgeber auszugeben. Dabei kann eine der jeweiligen Autorisierung angemessene Anzeige ausgegeben werden.

Projektionshologramm und der Bildgeber sind eingerichtet für die Erzeugung der Anzeige des Bildes, insbesondere bei der Erzeugung des projizierbaren Bildes durch den Bildgeber. Das bedeutet vorzugsweise, dass die vom Bildgeber ausgesendeten Lichtstrahlen auch zumindest teilweise das Projektionshologramm erreichen. Des Weiteren bedeutet dies, dass Bildgeber und Projektionshologramm aufeinander abgestimmt sind bezüglich Winkelspektrum der auf das Projektionshologramm auftreffenden Lichtstrahlen, Schwerpunktswinkel der auf das Projektionshologramm auftreffenden Lichtstrahlen, Frequenzspektrum der auf das Projektionshologramm auftreffenden Lichtstrahlen und/oder Kohärenz der auf das Projektionshologramm auftreffenden Lichtstrahlen. So können die vom Bildgeber erzeugten Bildinformationen besonders vorteilhaft durch das Projektionshologramm angezeigt werden.

Es kann bevorzugt sein, dass das Bild einen dynamischen angezeigten Bildinhalt, umfasst, bspw. zur Anzeige eines holographischen Bedienelementes und/oder einer Animation.

In einer weiteren bevorzugten Ausführungsform der Erfindung ist ein zweites Anzeigehologramm von dem transparenten Basiskörper umfasst, welches eingerichtet ist, durch eine Beleuchtung aus einem Umgebungslicht des Hologramms die Anzeige zu erzeugen. So können neben mindestens einer durch ein Signal der Steuerungseinrichtung in Gang gesetzte Anzeige eine allein durch das Umgebungslicht generierte Anzeige erzeugt werden, welche bspw. den Detektionsbereich kennzeichnet.

In einem zweiten Aspekt betrifft die Erfindung ein System für eine Türöffnungssteuerung einer Tür oder einer Klappe mit einer funktionalisierten Scheibe, umfassend einen transparenten Basiskörper mit einer Vorder- und einer Rückseite für die funktionalisierte Scheibe, eine erste holographische Anzeige für eine an eine Person gerichtete Anzeige eines Bildes in einem festgelegten ersten Anzeigebereich gegenüber der Vorderseite und/oder der Rückseite des transparenten Basiskörpers, eine Steuerungseinrichtung und ein erstes Kommunikationsmittel zum Senden und Empfangen von Signalen.

Dabei sind erstes Kommunikationsmittel und Steuerungseinrichtung eingerichtet für eine objektgebundene Autorisierungskontrolle eines zugeordneten, zweiten Kommunikationsmittels zum Senden und Empfangen von Signalen, insbesondere wenn dieses sich im Sende- und Empfangsbereich des ersten Kommunikationsmittels befindet, wobei die objektgebundene Autorisierungskontrolle auf einer Position und/oder Bewegung des zweiten Kommunikationsmittels in Bezug auf einen vorgegebenen Nahbereich des ersten Kommunikationsmittels beruht sowie auf Eigenschaften von zwischen erstem und zweitem Kommunikationsmittel ausgetauschten Signalen, wobei holographische Anzeige und Steuerungseinrichtung eingerichtet sind, die Anzeige des Bildes bei der objektgebundenen Autorisierung des zweiten Kommunikationsmittels zu erzeugen und wobei die Steuerungseinrichtung des Weiteren eingerichtet ist, ein Entriegelungssignal für ein Öffnen der Tür bei mindestens einer objektgebundenen Autorisierung auszugeben.

Bei der Erfindung gemäß diesem Aspekt können durch die Autorisierung neben einer Entriegelung der Tür vorteilhafterweise eine Anzeige eines Bildes generiert werden, z. B. um die Lage der Bedienkomponente anzuzeigen und/oder eine holographische Bedienkomponente anzuzeigen. Es können ebenso weitere wichtige Informationen, bspw. bei einem Fahrzeug der Ladestatus der Batterie, die Tankfüllung oder Verkehrsinformationen, bspw. am Morgen für den Weg zur Arbeit, eingeblendet werden. So kann die Bedienbarkeit verbessert werden, die Sicherheit wird erhöht und die Effizienz bei der jeweiligen Anwendung wird erhöht.

Dass die holographische Anzeige vom System umfasst ist, bedeutet vorzugsweise, dass geeignete Mittel zur Erzeugung einer holographischen Anzeige vom System umfasst sind. Diese geeigneten Mittel sind in diesem Dokument hinreichend beschrieben.

Dass die holographische Anzeige und die Steuerungseinrichtung eingerichtet sind, die Anzeige des Bildes bei der objektgebundenen Autorisierung des zweiten Kommunikationsmittels zu erzeugen, kann auch bedeuten, dass eine neue Anzeige eines Bildes erzeugt wird, bspw. kann ein neues Bild erzeugt werden, wobei vor der Autorisierung ein anderes Bild angezeigt wurde.

Vorzugsweise ist die holographische Anzeige eine Anzeige mit sichtbaren Licht, insbesondere in einem Wellenlängenbereich zwischen 420 nm und 750 nm.

Vorzugsweise erzeugt die holographische Anzeige (auch gemäß erstem Aspekt) ein reelles und/oder virtuelles, insbesondere ein schwebendes Bild.

Dem Fachmann ist ersichtlich, dass Vorteile, Definitionen und Ausführungsformen der erfindungsgemäßen Vorrichtung gemäß erstem Aspekt ebenso für die beanspruchte erfindungsgemäße Vorrichtung gemäß zweitem Aspekt gelten. Bspw. gelten die Ausführungen zum System, zur funktionalisierten Scheibe und zum transparenten Basiskörper, welche vorstehend beschrieben stehen, ebenso für die beanspruchte erfindungsgemäße Vorrichtung gemäß zweitem Aspekt.

In einer bevorzugten Ausführungsform der Erfindung umfasst das System eine Lichtquelle zur Beleuchtung mindestens eines von dem transparenten Basiskörper umfasstes erstes Anzeigehologramms bei Eingang eines Anzeigesignals, wobei die Steuerungseinrichtung eingerichtet ist, das Anzeigesignal bei der objektgebundenen Autorisierung an die Lichtquelle auszugeben und wobei das Anzeigehologramm und die Lichtquelle eingerichtet sind für die Erzeugung der Anzeige des Bildes bei der Beleuchtung, insbesondere des Anzeigehologramms, durch die Lichtquelle.

Dass das Anzeigehologramm vom transparenten Basiskörper umfasst ist, bedeutet vorzugsweise, dass das Anzeigehologramm am oder im Basiskörper angeordnet ist. Anzeigehologramm und transparenter Basiskörper können bspw. vor der Anordnung zwei separate Komponenten bilden.

In einer weiteren bevorzugten Ausführungsform der Erfindung umfasst das System einen Bildgeber zur Erzeugung eines projizierbaren Bildes bei Eingang eines Bildgebersignals und mindestens ein von dem transparenten Basiskörper umfasstes erstes Projektionshologramm, wobei die Steuerungseinrichtung eingerichtet ist, das Bildgebersignal bei der objektgebundenen Autorisierung des zweiten Kommunikationsmittels an den Bildgeber auszugeben, wobei das Projektionshologramm und der Bildgeber eingerichtet sind für die Erzeugung der Anzeige des Bildes, insbesondere bei der Erzeugung des projizierbaren Bildes durch den Bildgeber. Dann kann beispielhaft durch die Anzeige die Lage der Bedienkomponente angezeigt werden oder die holographische Bedienkomponente selbst angezeigt werden.

Sowohl bei der Ausführungsform mit einer Lichtquelle als auch bei der mit einem Bildgeber kann das jeweilige Hologramm auf verschiedene Arten beleuchtet werden: es kann eine Freistrahlbeleuchtung gewählt werden, welche von außerhalb des Basiskörpers direkt auf das Hologramm gerichtet wird; es kann eine Beleuchtung durch den Basiskörper hindurch stattfinden, wobei dieser als Lichtleiter dient, indem die Beleuchtungsstrahlen bspw. durch Totalreflektion geleitet werden; und es kann eine Edgelit Beleuchtung des Hologramms durch den Lichtleiter stattfinden. Dies gilt vorzugsweise ebenso für die Ausführungsformen der holographischen Anzeige gemäß dem ersten Aspekt der Erfindung.

In einer weiteren bevorzugten Ausführungsform der Erfindung umfasst das System weiterhin mindestens eine holographische Kamera für eine stereoskopische Bildaufnahme eines festgelegten Detektionsbereichs gegenüber der Vorderseite und/oder der Rückseite des transparenten Basiskörpers, wobei die holographische Kamera mindestens ein von dem Basiskörper umfasstes Aufnahmehologramm zur Umlenkung von Lichtstrahlen aus dem Detektionsbereich aufweist, wobei die Kamera und die Steuerungseinrichtung eingerichtet sind für eine personengebundene Autorisierungskontrolle einer durch die stereoskopische Bildaufnahme aufgenommenen Person, wobei die personengebundene Autorisierungskontrolle auf mindestens einer durch die stereoskopische Bildaufnahme feststellbaren Eigenschaft der Person beruht und wobei die Steuerungseinrichtung eingerichtet ist, ein Entriegelungssignal für ein Öffnen der Tür bei der objektgebundenen Autorisierung und der personengebundenen Autorisierung auszugeben. So kann eine Zwei-Faktor-Autorisierung realisiert werden.

In einer weiteren bevorzugten Ausführungsform der Erfindung ist die Steuerungseinrichtung eingerichtet, erst nach einer objektgebundenen Autorisierung eine personengebundene Autorisierungskontrolle zu ermöglichen.

In einer weiteren bevorzugten Ausführungsform der Erfindung ist eine Schließkomponente umfasst, welche eingerichtet ist für ein Ver- oder Entriegelung der Tür, wobei die Schließkomponente eingerichtet ist für eine Entriegelung der Tür bei der Ausgabe des Entriegelungssignals durch die Steuerungseinrichtung.

In einer weiteren bevorzugten Ausführungsform der Erfindung ist eine Bedienkomponente umfasst, welche eingerichtet ist für ein Bedienen der Tür durch die Person.

In einer weiteren bevorzugten Ausführungsform der Erfindung ist die Bedienkomponente eingerichtet für eine Aktivierung der Bedienkomponente bei der Ausgabe des Entriegelungssignals durch die Steuerungseinrichtung.

In einer weiteren bevorzugten Ausführungsform der Erfindung umfasst die Bedienkomponente einen Näherungssensor auf Basis von Ultraschall, optischem Sensor einer Drahtloskommunikationsschnittstelle und/oder Radar.

In einer weiteren bevorzugten Ausführungsform der Erfindung umfasst die Bedienkomponente mindestens einen kapazitiven Sensor. Kapazitive Sensoren sind bspw. von Touchscreens bekannt und funktionieren besonders einfach und zuverlässig.

In einer weiteren bevorzugten Ausführungsform der Erfindung umfasst die Bedienkomponente eine holographisch basierte Bedienkomponente.

In einer weiteren bevorzugten Ausführungsform der Erfindung umfasst das System mindestens eine zweite holographische Anzeige für eine an eine Person gerichtete Anzeige eines Bildes, wobei die zweite holographische Anzeige eingerichtet ist, bei einer vorgegebenen Beleuchtung aus einem Umgebungslicht des transparenten Basiskörpers die Anzeige Bildes zu erzeugen.

In einer weiteren bevorzugten Ausführungsform der Erfindung weist das System mindestens ein zweites, von dem transparenten Basiskörper umfasstes Anzeigehologramm für die an die Person gerichtete Anzeige des Bildes, welches eingerichtet ist, durch eine Beleuchtung aus einem Umgebungslicht des Hologramms die Anzeige zu erzeugen.

In einer weiteren bevorzugten Ausführungsform der Erfindung nach dem ersten Aspekt oder dem zweiten Aspekt umfasst die Anzeige eine Anzeige einer Bedienkomponente und/oder einer Bedienaufforderung für die Bedienkomponente und/oder eine Anzeige einer gewünschte Detektionsposition für die Person im Detektionsbereich umfasst. Die gewünschte Detektionsposition ist vorzugsweise vom Detektionsbereich umfasst.

In einer weiteren bevorzugten Ausführungsform der Erfindung nach dem ersten Aspekt oder dem zweiten Aspekt umfasst die holographische Kamera mindestens einen Bildsensor, wobei Aufnahmehologramm, transparenter Basiskörper und Bildsensor eingerichtet sind für eine zumindest teilweise Lichtübertragung zwischen Aufnahmehologramm und Bildsensor durch im Basiskörper geleitete Lichtstrahlen.

Mindestens ein Bildsensor kann auch als Detektor und/oder Detektorsystem bezeichnet werden, wobei ein Detektorsystem vorzugsweise mindestens zwei Bildsensoren umfassen kann.

Das Aufnahmehologramm kann dabei das aufzunehmende Licht aus dem Detektionsbereich vorzugsweise so umlenken, dass es durch den Basiskörper zum Bildsensor geleitet wird. Beispielweise kann das Licht über eine einem flächigen Teil zugehörige Außenfläche des Basiskörpers eingekoppelt werden und dann durch das Aufnahmehologramm in Richtung des Bildsensors geleitet werden, welcher z. B. an einer kurzen, nicht dem flächigen Teil zugehörigen seitlichen Außenfläche des Basiskörpers angeordnet vorliegt. Dabei kann das Licht direkt, d. h. insbesondere ohne weitere Reflektionen, zum Bildsensor geleitet werden. Es ist jedoch ebenso möglich, dass das Licht unter einem solchen Winkel in den Basiskörper durch das Aufnahmehologramm umgelenkt wird, dass dieses Licht unter mindestens einer totalen internen Reflektion an einer Außenfläche des Basiskörpers zum Bildsensor geleitet wird. So kann der Basiskörper vorteilhafterweise als Lichtleiter fungieren.

In einer weiteren bevorzugten Ausführungsform der Erfindung nach dem ersten Aspekt oder dem zweiten Aspekt umfasst der transparente Basiskörper weiterhin mindestens ein erstes Auskoppelhologramm, welches eingerichtet ist, die geleiteten Lichtstrahlen in Richtung auf den Bildsensor aus dem transparenten Basiskörper auszukoppeln. So kann eine hohe Flexibilität zur Anordnung des Bildsensors erreicht werden.

In einer Ausführungsform umfasst das System einen funktionalisierten Wellenleiter für ein Detektorsystem, wobei der Wellenleiter einen transparenten Basiskörper mit einer Vorderseite und einer Rückseite aufweist, wobei der Basiskörper einen teiltransparenten Einkoppelbereich und einen davon in einer ersten Richtung (R1) beabstandeten Auskoppelbereich aufweist, wobei der Einkoppelbereich als Aufnahmehologramm eine diffraktive Struktur umfasst, die von einem zu detektierenden Objekt, insbesondere im Detektionsbereich, kommende und auf die Vorderseite treffende Strahlung nur einen Teil so umlenkt, dass der umgelenkte Teil als eingekoppelte Strahlung im Basiskörper durch Reflexionen bis zum Auskoppelbereich propagiert und auf den Auskoppelbereich trifft, wobei der Auskoppelbereich von der auf ihn treffenden eingekoppelten Strahlung mindestens einen Teil so umlenkt, dass der umgelenkte Teil aus dem Basiskörper über die Vorderseite oder Rückseite austritt, um auf das Detektorsystem zu treffen. Dabei umfasst der Auskoppelbereich bevorzugt eine diffraktive Struktur zur Umlenkung, insbesondere ein Auskoppelhologramm. Bevorzugt ist dabei die Ausdehnung des Einkoppelbereiches in einer zweiten Richtung (R2) quer zur ersten Richtung (R1) größer ist als die Ausdehnung des Auskoppelbereiches (5) in der zweiten Richtung (R2).

In einer weiteren bevorzugten Ausführungsform der Erfindung nach dem ersten Aspekt oder dem zweiten Aspekt System ist die holographische Kamera eingerichtet für eine stereoskopische Bildaufnahme eines monochromen Bildes, eines mehrfarbigen Bildes und/oder eines Infrarot-Bildes. Monochrom bedeutet vorzugsweise, dass für die Bildaufnahme ein Frequenzspektrum verwendet wird, welches gemeinhin als "einfarbig" wahrgenommen wird, z. B. rot. Ein einfarbiges Bild kann mit besonders einfachen und preisgünstigen Komponenten realisiert werden. Ein mehrfarbiges Bild kann ein kontinuierliches Spektrum im sichtbaren Bereich umfassen, es kann sich jedoch ebenso um ein aus mehreren Farben zusammengesetztes Bild handeln. Beispielsweise können die RGB (Rot, Grün, Blau), CMY (Cyan, Magenta, Gelb) und/oder CMYK (zusätzlich schwarz) Farbräume für die Bildaufnahme verwendet werden. Hierfür können geeignete Hologramme, z. B. ein Hologrammstack und/oder Multiplexhologramme (s. o.) zum Einsatz kommen. Durch solche mehrfarbigen Bildaufnahmen können beispielsweise mehr Bildinformationen realisiert werden und es kann vorteilhafterweise eine höhere Sicherheit bei der Autorisierungskontrolle erzielt werden.

Ein Infrarotbild ist insbesondere ein Bild, welches durch Aufnahme von Nahinfrarotstrahlung erzeugt wurde. Nahinfrarotstrahlung ist vorzugsweise Strahlung in einem Wellenlängenbereich zwischen 750 nm und 3 µm (Mikrometer), insbesondere zwischen 780 nm und 1,4 µm. Nahinfrarotstrahlung ist insbesondere unsichtbar für eine zu detektierende Person.

Ein Infrarotbild kann ebenso vorzugsweise Wärmestrahlung umfassen, welche vorzugsweise im Bereich 3 µm bis 50 µm umfasst. Ein Infrarotbild mit Wärmestrahlung hat insbesondere den Vorteil, dass kein Rest- und/oder Umgebungslicht für die personengebundene Autorisierungskontrolle benötigt wird, da die Infrarotstrahlung insbesondere durch die Wärmestrahlung der aufgenommenen Person selbst erzeugt wird. Somit kann vorteilhafterweise auch bei Nacht eine personengebundene Autorisierungskontrolle ohne eine zusätzliche Beleuchtungsquelle und ohne, dass eine Person dies bemerken kann, vorgenommen werden.

In einer weiteren bevorzugten Ausführungsform der Erfindung nach dem ersten Aspekt oder dem zweiten Aspekt sind das erste Anzeigehologramm und die Lichtquelle und/oder das Projektionshologramm und der Bildgeber eingerichtet für eine zumindest teilweise Lichtübertragung zwischen Anzeigehologramm und Lichtquelle und/oder Projektionshologramm und Bildgeber durch im Basiskörper geleitete Lichtstrahlen.

Die Lichtquelle zur Beleuchtung des Anzeigehologramms bzw. der Bildgeber zur Beleuchtung des Projektionshologramms kann z. B. an einer kurzen, nicht dem flächigen Teil zugehörigen seitlichen Außenfläche des Basiskörpers angeordnet vorliegen und durch diese Außenfläche in den Basiskörper einstrahlen (bevorzugt sogenanntes EdgeLit-Hologramm). Hierfür kann eine Einkoppelkomponente umfasst sein. Dabei kann das Licht direkt, d. h. insbesondere ohne weitere Reflektionen, zum Anzeigehologramm bzw. Projektionshologramm geleitet werden. Es ist jedoch ebenso möglich, dass das Licht unter einem solchen Winkel in den Basiskörper in Richtung des Anzeigehologramm bzw. Projektionshologramms eingekoppelt wird, dass dieses Licht unter mindestens einer totalen internen Reflektion an einer Außenfläche des Basiskörpers zum Anzeigeholgramm bzw. Projektionshologramm geleitet wird. So kann der Basiskörper vorteilhafterweise als Lichtleiter fungieren. Das Anzeigehologramm und/oder das Projektionshologramm koppelt dabei vorzugsweise das Licht in Richtung des Anzeigebereichs aus. Eine andere Möglichkeit der Anordnung des Bildgebers oder der Lichtquelle ist die Anordnung gegenüber der Vorder- und/oder Rückseite des Basiskörpers. Zur Einkopplung in den Basiskörper, so dass in diesem wie vorstehend beschrieben das Licht geleitet wird kann ein entsprechendes optisches Element, z. B. ein diffraktives Element, insbesondere ein Einkoppelhologramm oder bspw. ein innerhalb des Basiskörpers angeordnetes reflektives Element, insbesondere ein Spiegel umfasst sein.

In einer weiteren bevorzugten Ausführungsform der Erfindung nach dem ersten Aspekt oder dem zweiten Aspekt sind Bildgeber und Projektionshologramm und/oder Lichtquelle und erstes Anzeigehologramm eingerichtet für eine Freistrahl-Lichtübertragung. Das bedeutet insbesondere, dass die Lichtstrahlen des Bildgebers oder der Lichtquelle überwiegend nicht im Basiskörper übertragen werden, sondern als Freistrahl von Bildgeber bzw. Lichtquelle zum Anzeigehologramm und/oder Projektionshologramm übertragen werden. So kann eine besonders einfache technische Lösung realisiert werden, welche auch gut nachgerüstet werden kann.

In einer weiteren bevorzugten Ausführungsform der Erfindung nach dem ersten Aspekt oder dem zweiten Aspekt ist die durch die stereoskopische Bildaufnahme feststellbare Eigenschaft eine Eigenschaft, welche geeignet ist für eine eindeutige Identifikation mindestens einer bestimmten Person. Somit findet eine personengebundene Autorisierung vorzugsweise nur statt, wenn diese mindestens eine bestimmte Person identifiziert wird.

In einer weiteren bevorzugten Ausführungsform der Erfindung nach dem ersten Aspekt oder dem zweiten Aspekt ist die durch die stereoskopische Bildaufnahme feststellbare Eigenschaft eine Eigenschaft, welche geeignet ist für eine Zuordnung der Person zu einer bestimmten Personengruppe, vor allem zur Zuordnung der Personengruppe von erwachsenen Personen und/oder von nicht-erwachsenen Personen. So kann beispielsweise unterschieden werden, ob die Person im Detektionsbereich eine erwachsene Person ist oder nicht. Es kann dann beispielsweise bevorzugt sein, dass nur eine erwachsene Person autorisiert wird. Dies wäre z. B. für eine Fahrertür zum Zugang zum Fahrersitz eines Fahrzeugs oder für eine Kneipentür besonders vorteilhaft.

In einer weiteren bevorzugten Ausführungsform der Erfindung nach dem ersten Aspekt oder dem zweiten Aspekt ist die Steuerungseinrichtung eingerichtet, aufgrund einer personengebundenen und/oder objektgebundenen Autorisierung ein datenbasiertes Nutzerprofil bereitzustellen, welches mit einer autorisierten Person verknüpft ist. Dieses datenbasierte Nutzerprofil kann beispielsweise aus vorgegebenen und/oder erlernten Daten bestehen. Beispielsweise kann, wenn das System für eine Fahrertür verwendet wird, aus dem datenbasierten Nutzerprofil hervorgehen, dass eine identifizierte Person ein minderjähriger Fahrer ist, welcher nur in Begleitung einer erwachsenen Person das Fahrzeug führen darf.

In einer weiteren bevorzugten Ausführungsform der Erfindung nach dem ersten Aspekt oder dem zweiten Aspekt ist ein Türöffner umfasst, welche eingerichtet ist, bei dem Entriegelungssignal durch die Steuerungseinrichtung und/oder einem Öffnungssignal durch die Bedienkomponente eine Tür zu öffnen. Ein Türöffner kann beispielsweise eine Komponente sein, welche durch Aufbringung einer Kraft die Tür von einem geschlossenen Zustand in einen geöffneten Zustand verbringt. Ein solcher Türöffner kann beispielsweise elektrisch, magnetisch, pneumatisch, hydraulisch und/oder mechanisch angetrieben sein. So ist eine sichere "Hands-free" Lösung bei gleichzeitiger Aktorik zum Aufschwenken der Tür möglich, welche einfach zu bedienen und besonders hygienisch ist.

In einer weiteren bevorzugten Ausführungsform der Erfindung nach dem ersten Aspekt oder dem zweiten Aspekt ist das zweite Kommunikationsmittel umfasst, welches eingerichtet ist für eine Anordnung in einer tragbaren Komponente, bevorzugt in einem Schlüssel. Eine tragbare Komponente kann ebenso ein Gimmick-Objekt umfassen, z. B. einen Zauberstab.

In einem weiteren Aspekt betrifft die Erfindung ein Kommunikationsmittel, welches in einer tragbaren Komponente, bevorzugt in einem Schlüssel umfasst ist und eingerichtet ist für eine Verwendung als zweites Kommunikationsmittel in einem System nach dem ersten oder zweiten Aspekt.

Dem Fachmann ist ersichtlich, dass Vorteile, Definitionen und Ausführungsformen des erfindungsgemäßen Systems gemäß erstem und zweitem Aspekt ebenso für das beanspruchte erfindungsgemäße Kommunikationsmittel gelten.

In einem weiteren Aspekt betrifft die Erfindung eine Tür mit funktionalisierter Scheibe, umfassend ein System nach einem oder mehreren der vorherigen Ansprüche.

Dem Fachmann ist ersichtlich, dass Vorteile, Definitionen und Ausführungsformen des erfindungsgemäßen Systems gemäß erstem und zweitem Aspekt ebenso für die beanspruchte erfindungsgemäße Tür gelten.

In einer bevorzugten Ausführungsform der Erfindung umfasst die Tür eine dritte holographische Anzeige. Die dritte holographische Anzeige kann zusätzlich bzw. unabhängig von einer holographischen Anzeige des oben genannten Systems umfasst sein. Bspw. kann die dritte holographische Anzeige zur Anzeige einer Bedienkomponente, insbesondere eines Türgriffs verwendet werden. Die holographische Anzeige kann, mutatis mutandis, Vorteile, Definitionen, Merkmale und Ausführungsformen wie die holographische Anzeige des Systems aufweisen. Beispielsweise kann die holographische Anzeige auch eine passive Anzeige, welche durch Umgebungslicht beleuchtet wird, sein. Die holographische Anzeige kann ebenso durch ein Signal der Steuerungseinrichtung, wie oben beschrieben, aktiviert werden.

In einer bevorzugten Ausführungsform der Erfindung ist Tür für ein Fahrzeug.

Ein Fahrzeug ist insbesondere ein Personenkraftwagen, ein Lastkraftwagen und/oder ein Schienenfahrzeug, bspw. ein Zug.

Durch eine solche Tür kann neben den hier bereits beschriebenen Ausführungen auch ein Kinderschutz realisiert werden, wenn beispielsweise die Tür eine hintere Seitentür ist und das System festgestellt hat, dass ein Kind die Tür geöffnet hat. Dann kann beispielsweise verhindert werden, dass die Tür einfach so wieder geöffnet wird. Ein Öffnen kann beispielsweise von gewissen Umständen abhängig gemacht werden, z. B. kann durch die mindestens eine Kamera eine Verkehrsüberwachung vorgenommen werden und die Tür nur geöffnet werden, wenn keine Gefahr durch Verkehr besteht.

In einer weiteren bevorzugten Ausführungsform der Erfindung ist die Tür für ein Gebäude. Dabei kann es sich bevorzugt um eine Außentür oder eine Innentür handeln.

Ähnlich wie vorstehend beschrieben kann auch für eine Gebäudetür eine Art Kindersicherung realisiert werden, welche ein unkontrolliertes Raustreten von Kindern vor die Tür verhindert.

In einer weiteren bevorzugten Ausführungsform der Erfindung ist die Tür für ein Haushaltsgerät, insbesondere für einen Backofen, einen Kühlschrank, eine Waschmaschine, einen Schrank, einen Schnapsschrank, einen Waffenschrank, einen Wäschetrockner und/oder eine Mikrowelle. So kann beispielsweise ein Öffnen einer Backofen- oder Waschmaschinentür durch Verweigerung einer personengebundenen Autorisierung realisiert werden.

In einem weiteren Aspekt betrifft die Erfindung ein Fahrzeug, umfassend mindestens eine Tür wie beschrieben und/oder ein System nach dem ersten oder zweiten Aspekt wie beschrieben.

Dem Fachmann ist ersichtlich, dass Vorteile, Definitionen und Ausführungsformen des erfindungsgemäßen Systems gemäß erstem und zweitem Aspekt und der erfindungsgemäßen Tür ebenso für das beanspruchte erfindungsgemäße Fahrzeug gelten.

In einer bevorzugten Ausführungsform der Erfindung ist das Fahrzeug und/oder die Steuerungseinrichtung eingerichtet zur Vornahme von mindestens einer nutzerspezifischen Einstellung des Fahrzeugs aufgrund des Nutzerprofils der autorisierten Person. Das kann beispielsweise bedeuten, dass die Steuerungseinrichtung mindestens ein entsprechendes Ausgabesignal ausgibt, durch welches die Einstellung, bspw. über weitere Fahrzeugkomponenten, realisiert wird. Bei dieser Einstellung kann es sich beispielsweise um die bevorzugte Sitzposition einer identifizierten Person handeln, welche z. B. durch eine elektrische Sitzeinstellung aufgrund des Ausgabesignals der Steuerungseinrichtung eingestellt wird. Es kann sich ebenso um eine durch die Bordelektronik des Fahrzeugs realisierte Begrenzung der Höchstgeschwindigkeit handeln, welche für einen Fahranfänger nicht überschritten werden soll. Ein weiteres Beispiel wäre die Erlaubnis zum Starten des Fahrzeugs für einen minderjährigen Fahrschüler nur bei einer Begleitung durch einen Elternteil (welcher beispielsweise bei einer personengebundenen Autorisierungskontrolle an der Beifahrertür identifiziert wurde). Es kann beispielsweise die Spiegeleinstellung oder weitere Einstellungen vorgenommen werden und es kann beispielsweise eine Fahrererkennung mit einem personenbezogenen Fahrerprofil realisiert werden.

In einem weiteren Aspekt betrifft die Erfindung ein Gebäude, umfassend mindestens eine Tür wie beschrieben und/oder ein System nach dem ersten oder zweiten Aspekt wie beschrieben.

Dem Fachmann ist ersichtlich, dass Vorteile, Definitionen und Ausführungsformen des erfindungsgemäßen Systems gemäß erstem und zweitem Aspekt und der erfindungsgemäßen Tür ebenso für das beanspruchte erfindungsgemäße Gebäude gelten.

Es können beispielsweise Zugangskontrollen in der Industrie und für Betriebe mit erhöhter Sicherheit und gleichzeitigem minimalen Bedienaufwand realisiert werden.

In einer bevorzugten Ausführungsform der Erfindung ist das Gebäude und/oder die Steuerungseinrichtung eingerichtet zur Vornahme von nutzerspezifischen Einstellungen des Gebäudes aufgrund des Nutzerprofils der autorisierten Person. Hier können analog zu oben in Bezug auf das Fahrzeug beschriebenen Einstellungen Einstellungen vorgenommen werden, z. B. ein bestimmtes Heizprofil der Heizung oder die Freischaltung bzw. Blockierung bestimmter im Gebäude vorhandener Geräte (PC, Fernseher etc.) oder Räume. Es kann beispielsweise für Wohngemeinschaften der Zutritt zu einzelnen Räumen durch eine personengebundene Autorisierung einzelner Räume realisiert werden.

In einem weiteren Aspekt betrifft die Erfindung ein Haushaltsgerät, umfassend eine Tür wie beschrieben und/oder oder ein System gemäß erstem oder zweitem Aspekt wie beschrieben. So kann beispielsweise ein Kinderschutz für einen Backofen realisiert werden. Es kann beispielsweise ein Zugang nur für bestimmte Personen realisiert werden.

In einer bevorzugten Ausführungsform der Erfindung ist das Haushaltsgerät und/oder die Steuerungseinrichtung eingerichtet zur Vornahme von nutzerspezifischen Einstellungen des Haushaltsgerätes aufgrund des Nutzerprofils der autorisierten Person. Hier können analog zu oben in Bezug auf das Fahrzeug oder das Gebäude beschriebenen Einstellungen Einstellungen vorgenommen werden. Es können beispielsweise bei einem Kühlschrank für Kinder bestimmte vereinbarte Nutzungszeiten überprüft oder abgesichert werden, um z. B. ein unkontrolliertes "Naschen" zwischen den Mahlzeiten zu verhindern. Es kann eine Personalisierung und eine Realisierung bestimmter zeitlicher Nutzerprofile erreicht werden, indem bestimmten oder allen Personen nur zu gewissen Zeiten Zugang gewährt wird. So kann beispielsweise ein kontrollierter Zugang (nur für gewisse Personen und/oder zu gewissen Zeiten) realisiert werden.

In einem weiteren Aspekt betrifft die Erfindung ein Verfahren für ein Türöffnungssteuerungssystem einer Tür oder Klappe mit einer funktionalisierten Scheibe, wobei das System einen transparenten Basiskörper mit einer Vorder- und einer Rückseite für die funktionalisierte Scheibe, mindestens eine holographische Kamera für eine stereoskopische Bildaufnahme eines festgelegten Detektionsbereichs gegenüber der Vorderseite und/oder der Rückseite des transparenten Basiskörpers, wobei die holographische Kamera mindestens ein von dem Basiskörper umfasstes Aufnahmehologramm zur Umlenkung von Lichtstrahlen aus dem Detektionsbereich und eine Steuerungseinrichtung aufweist. Dabei umfasst das Verfahren die Schritte: Vornahme einer personengebundene Autorisierungskontrolle einer durch die stereoskopische Bildaufnahme aufgenommenen Person durch Kamera und Steuerungseinrichtung, wobei die personengebundene Autorisierungskontrolle auf mindestens einer durch die stereoskopische Bildaufnahme feststellbaren Eigenschaft der Person beruht und Ausgabe eines Entriegelungssignal für ein Öffnen der Tür durch die Steuerungseinrichtung bei mindestens einer personengebundenen Autorisierung.

Dem Fachmann ist ersichtlich, dass Vorteile, Definitionen und Ausführungsformen der erfindungsgemäßen Vorrichtungen, z. B. für das System nach dem ersten oder zweiten Aspekt, ebenso für das beanspruchte erfindungsgemäße Verfahren gelten und umgekehrt.

In einer bevorzugten Ausführungsform der Erfindung weist das System weiterhin ein erstes Kommunikationsmittel zum Senden und Empfangen von Signalen auf. Dabei umfasst das Verfahren die folgenden Schritte:
Etablierung eines Signalaustausches mit einem zugeordneten, zweiten Kommunikationsmittel zum Senden und Empfangen von Signalen, wenn dieses sich im Sende- und Empfangsbereich des ersten Kommunikationsmittels befindet,
Vornahme einer objektgebundenen Autorisierungskontrolle durch Steuerungseinheit und erstem Kommunikationsmittel basierend auf einer Position und/oder Bewegung des zweiten Kommunikationsmittels in Bezug auf einen vorgegebenen Nahbereich des ersten Kommunikationsmittels sowie auf den Eigenschaften ausgetauschter Signale und
Ausgabe eines Entriegelungssignals durch die Steuerungseinheit für ein Öffnen der Tür bei der personengebundenen Autorisierung und einer objektgebundenen Autorisierung des zweiten Kommunikationsmittels bei der objektgebundenen Autorisierungskontrolle.

Die Etablierung eines Signalaustausches mit einem zugeordneten, zweiten Kommunikationsmittel zum Senden und Empfangen von Signalen, wenn dieses sich im Sende- und Empfangsbereich des ersten Kommunikationsmittels befindet ist vorzugsweise umfasst, wenn vorstehend beschrieben wird, dass erstes Kommunikationsmittel und Steuerungseinrichtung eingerichtet sind für eine objektgebundene Autorisierungskontrolle eines zugeordneten, zweiten Kommunikationsmittels zum Senden und Empfangen von Signalen. Dieser Schritt kann beispielsweise dadurch realisiert werden, dass das erste Kommunikationsmittel regelmäßig ein Signal aussendet. Wenn sich dann ein zugeordnetes zweites Kommunikationsmittel im Sende- und Empfangsbereich befindet, kann dieses wiederum ein Antwortsignal aussenden, welches vom ersten Kommunikationsmittel empfangen wird. Erst nach Empfang dieses Kommunikationssignals kann dann vorzugsweise durch das erste Kommunikationsmittel ein Signalaustausch initiiert werden, welcher dann zur objektgebundenen Autorisierungskontrolle herangezogen werden kann.

In einer bevorzugten Ausführungsform der Erfindung wird die personengebundene Autorisierungskontrolle erst nach einer objektgebundenen Autorisierung vorgenommen.

In einer bevorzugten Ausführungsform der Erfindung umfasst das System weiterhin eine Schließkomponente, welche eingerichtet ist für eine Ver- oder Entriegelung der Tür, wobei die Schließkomponente eine Entriegelung der Tür bei der Ausgabe des Entriegelungssignals durch die Steuerungseinrichtung vornimmt.

Es kann dabei bevorzugt sein, dass die Schließkomponente ansonsten verschlossen ist bzw. sich in einem Verriegelungszustand befindet.

In einer weiteren bevorzugten Ausführungsform der Erfindung umfasst das System weiterhin eine Bedienkomponente, welche eingerichtet ist für ein Bedienen der Tür durch die Person, wobei die Bedienkomponente bei der Ausgabe des Entriegelungssignals durch die Steuerungseinrichtung aktiviert wird.

In einer weiteren bevorzugten Ausführungsform der Erfindung umfasst das System weiterhin mindestens eine erste holographische Anzeige für eine an eine Person gerichtete Anzeige eines Bildes in einem festgelegten Anzeigebereich gegenüber der Vorderseite und/oder der Rückseite des transparenten Basiskörpers, wobei die Steuerungseinrichtung bei einer objektgebundenen und/oder personengebundenen Anzeige ein Bildgebersignal an die holographische Anzeige ausgibt und die holographische Anzeige ein dem Bildgebersignal entsprechendes Bild anzeigt, bevorzugt für eine Anzeige einer Bedienkomponente, einer Anzeige einer Bedienaufforderung für die Bedienkomponente und/oder eine Anzeige einer gewünschte Detektionsposition für die Person im Detektionsbereich. Dies kann bspw. dadurch realisiert werden, dass das Bildgebersignal einem Bildgeber und/oder einer Lichtquelle zur Beleuchtung eines entsprechenden Hologramms, insbesondere eines Projektionshologramms und/oder eines Anzeigehologramms zugeführt wird. Das Bildgebersignal kann bevorzugt auch einem Anzeigesignal (s. o.) entsprechen.

In einer weiteren bevorzugten Ausführungsform der Erfindung umfasst das System weiterhin einen Türöffner zum Öffnen einer Tür, wobei der Türöffner bei dem Entriegelungssignal durch die Steuerungseinrichtung und/oder einem Öffnungssignal durch die Bedienkomponente eine Tür öffnet.

In einer weiteren bevorzugten Ausführungsform der Erfindung ist die durch die personengebundene Autorisierungskontrolle feststellbare Eigenschaft der Person eine individuelle Eigenschaft, welche die Identifikation mindestens einer bestimmten Person ermöglicht.

In einer weiteren bevorzugten Ausführungsform der Erfindung ist die durch die personengebundene Autorisierungskontrolle feststellbare Eigenschaft der Person eine Eigenschaft, welche geeignet ist für eine Zuordnung der Person zu einer bestimmten Personengruppe, vor allem zur Zuordnung der Personengruppe von erwachsenen Personen und/oder von nicht-erwachsenen Personen.

In einer weiteren bevorzugten Ausführungsform der Erfindung stellt die Steuerungseinrichtung aufgrund einer personengebundenen und/oder objektgebundenen Autorisierung ein datenbasiertes Nutzerprofil bereit, welches mit einer autorisierten Person verknüpft ist und aufgrund dessen bevorzugt mindestens ein weiteres, vom Nutzerprofil abhängiges Ausgabesignal durch die Steuerungseinrichtung erzeugt wird. Insbesondere handelt es sich dabei um mehrere Ausgabesignale.

In einem weiteren Aspekt betrifft die Erfindung ein Verfahren für ein Türöffnungssteuerungssystem einer Tür oder Klappe mit einer funktionalisierten Scheibe, wobei das System einen transparenten Basiskörper mit einer Vorder- und einer Rückseite für die funktionalisierte Scheibe, eine erste holographische Anzeige für eine an eine Person gerichtete Anzeige eines Bildes in einem festgelegten ersten Anzeigebereich gegenüber der Vorderseite und/oder der Rückseite des transparenten Basiskörpers, eine Steuerungseinrichtung und ein erstes Kommunikationsmittel zum Senden und Empfangen von Signalen aufweist. Das Verfahren umfasst die folgenden Schritte:
Etablierung eines Signalaustausches mit einem zugeordneten, zweiten Kommunikationsmittel zum Senden und Empfangen von Signalen, wenn dieses sich im Sende- und Empfangsbereich des ersten Kommunikationsmittels befindet,
Vornahme einer objektgebundenen Autorisierungskontrolle durch Steuerungseinheit und erstem Kommunikationsmittel basierend auf einer Position und/oder Bewegung des zweiten Kommunikationsmittels in Bezug auf einen vorgegebenen Nahbereich des ersten Kommunikationsmittels sowie auf den Eigenschaften ausgetauschter Signale,
Ausgabe eines Bildgebersignals an die holographische Anzeige durch die Steuerungseinrichtung bei einer objektgebundenen und/oder personengebundenen Autorisierung
Anzeige eines dem Bildgebersignal entsprechendes Bild durch die holographische Anzeige, bevorzugt Anzeige einer Bedienkomponente, einer Anzeige einer Bedienaufforderung für die Bedienkomponente und/oder eine Anzeige einer gewünschte Detektionsposition für die Person im Detektionsbereich
Ausgabe eines Entriegelungssignals durch die Steuerungseinheit für ein Öffnen der Tür bei mindestens einer objektgebundenen Autorisierung des zweiten Kommunikationsmittels.

Dem Fachmann ist ersichtlich, dass Vorteile, Definitionen und Ausführungsformen der erfindungsgemäßen Vorrichtungen, z. B. des Systems gemäß dem ersten oder zweiten Aspekt, und gemäß des erfindungsgemäßen ersten Verfahrens ebenso für das beanspruchte erfindungsgemäße zweite Verfahren gelten und umgekehrt.

Das Bildgebersignal kann bevorzugt auch einem Anzeigesignal (s. o.) entsprechen. Das Bildgebersignal kann einem Bildgeber und/oder einer Lichtquelle zur Beleuchtung eines entsprechenden Hologramms, insbesondere eines Projektionshologramms und/oder Anzeigehologramms zugeführt wird.

In einer bevorzugten Ausführungsform der Erfindung umfasst das System weiterhin mindestens eine holographische Kamera für eine stereoskopische Bildaufnahme eines festgelegten Detektionsbereichs gegenüber der Vorderseite und/oder der Rückseite des transparenten Basiskörpers, wobei die holographische Kamera mindestens ein von dem Basiskörper umfasstes Aufnahmehologramm zur Umlenkung von Lichtstrahlen aus dem Detektionsbereich aufweist, wobei das Verfahren weiterhin folgende Schritte umfasst:
Vornahme einer personengebundene Autorisierungskontrolle einer durch die stereoskopische Bildaufnahme aufgenommenen Person durch Kamera und Steuerungseinrichtung, wobei die personengebundene Autorisierungskontrolle auf mindestens einer durch die stereoskopische Bildaufnahme feststellbaren Eigenschaft der Person beruht,
Ausgabe eines Entriegelungssignal für ein Öffnen der Tür durch die Steuerungseinrichtung bei einer personengebundenen und einer objektgebundenen Autorisierung.

In einer weiteren bevorzugten Ausführungsform der Erfindung wird die personengebundene Autorisierungskontrolle erst nach einer objektgebundenen Autorisierung vorgenommen.

In einer weiteren bevorzugten Ausführungsform der Erfindung umfasst das System weiterhin eine Schließkomponente, welche eingerichtet ist für eine Ver- oder Entriegelung der Tür, wobei die Schließkomponente eine Entriegelung der Tür bei der Ausgabe des Entriegelungssignals durch die Steuerungseinrichtung vornimmt.

In einer weiteren bevorzugten Ausführungsform der Erfindung umfasst das System weiterhin eine Bedienkomponente, welche eingerichtet ist für ein Bedienen der Tür durch die Person, wobei die Bedienkomponente bei der Ausgabe des Entriegelungssignals durch die Steuerungseinrichtung aktiviert wird.

In einer weiteren bevorzugten Ausführungsform der Erfindung umfasst das System weiterhin einen Türöffner zum Öffnen einer Tür, wobei der Türöffner bei dem Entriegelungssignal durch die Steuerungseinrichtung und/oder einem Öffnungssignal durch die Bedienkomponente eine Tür öffnet.

In einer weiteren bevorzugten Ausführungsform der Erfindung ist die durch die personengebundene Autorisierungskontrolle feststellbare Eigenschaft der Person eine individuelle Eigenschaft, welche die Identifikation mindestens einer bestimmten Person ermöglicht.

In einer weiteren bevorzugten Ausführungsform der Erfindung ist die durch die personengebundene Autorisierungskontrolle feststellbare Eigenschaft der Person eine Eigenschaft, welche geeignet ist für eine Zuordnung der Person zu einer bestimmten Personengruppe, vor allem zur Zuordnung der Personengruppe von erwachsenen Personen und/oder von nicht-erwachsenen Personen.

In einer weiteren bevorzugten Ausführungsform der Erfindung stellt die Steuerungseinrichtung aufgrund einer personengebundenen und/oder objektgebundenen Autorisierung ein datenbasiertes Nutzerprofil bereit, welches mit einer autorisierten Person verknüpft ist und aufgrund dessen bevorzugt mindestens ein weiteres, vom Nutzerprofil abhängiges Ausgabesignal durch die Steuerungseinrichtung erzeugt wird. Bevorzugt handelt es sich dabei um mehrere Ausgabesignale.

### Beschreibung der Erfindung:

Die Erfindung soll im Folgenden unter Verweis auf weitere Abbildungen und Beispiele erläutert werden. Die Beispiele und Abbildungen dienen der Illustration bevorzugter Ausführungsform der Erfindung, ohne diese zu beschränken.
**Figur 1** zeigt eine Fahrzeugtür mit einem System zur objektgebundenen Autorisierungskontrolle und einer holographischen Anzeige für eine holographische Bedienkomponente.
**Figur 2** zeigt mögliche Anordnungen der holographischen Kameras in einer Fahrzeugtür.
**Figur 3** zeigt eine passive, durch Umgebungslicht angeregte holographische Anzeige in einer Fahrzeugtür.
**Figur 4** zeigt die Anzeige einer Bedienkomponente nach der personengebundenen Autorisierung in einer Fahrzeugtür.
**Figur 5** zeigt die holographische Anzeige aufgrund einer Zutrittsverweigerung.
**Figur 6** zeigt zwei verschiedene Ausführungsbeispiele für eine Haustür mit dem beschriebenen System.
**Figur 7** zeigt eine Ausführungsform einer holographischen Kamera in einer Seitenansicht.
**Figur 8** zeigt eine weitere Ausführungsform einer holographischen Kamera in einer Seitenansicht.
**Figur 9** zeigt eine weitere Ausführungsform einer holographischen Kamera in einer Seitenansicht.

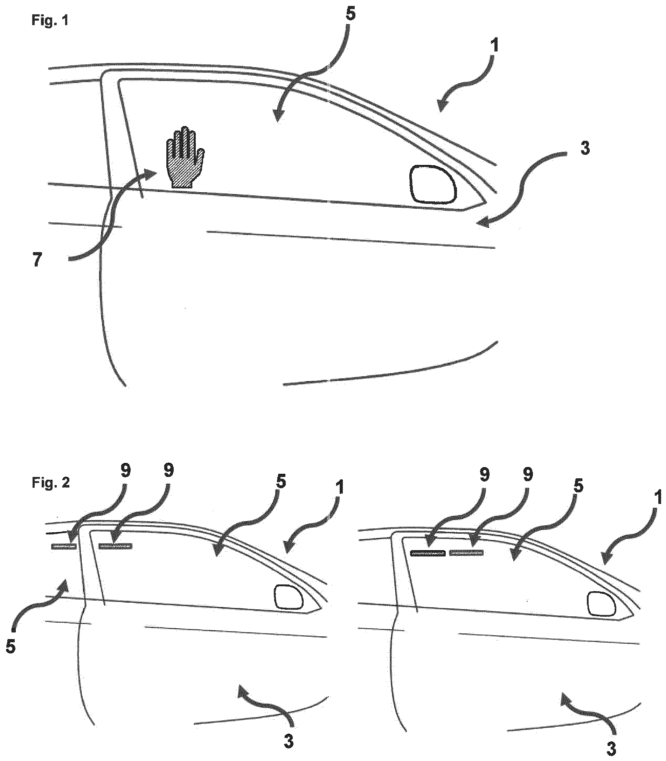

**Figur 1** zeigt einen Ausschnitt eines Fahrzeugs **1** mit einer Tür **3,** welche ein System zur objektgebundenen Autorisierungskontrolle wie beschrieben umfasst. Die funktionalisierte Scheibe **5** weist einen entsprechenden transparenten Basiskörper auf. Typischerweise wird die funktionalisierte Scheibe **5** durch den transparente Basiskörper gebildet. Wird eine objektgebundene Autorisierung festgestellt, wird eine holographische Anzeige **7** generiert. In diesem Fall handelt es sich um ein holographisches Bedienelement, welches durch eine holographisch angezeigte Hand anzeigt, wo die autorisierte Person ihre Hand zum Öffnen der Tür **3** platzieren soll.

**Figur 2** zeigt ebenso jeweils links und rechts einen Ausschnitt eines Fahrzeugs **1** mit einer Tür **3.** Hier sind zwei Aufnahmehologramme **9** für zwei holographische Kameras gezeigt, welche für die stereoskopische Bildaufnahme verwendet werden, um die personengebundene Autorisierungskontrolle durchzuführen.

Im linken Bild werden dabei zwei funktionalisierte Scheiben **5** verwendet, eine vordere Seitenscheibe zwischen A- und B-Säule und eine hintere Seitenscheibe hinter der B-Säule, welche jeweils einen transparenten Basiskörper mit einem Aufnahmehologramm **9** umfassen.

Im rechten Bild ist nur die vordere Seitenscheibe eine funktionalisierte Scheibe **5,** welche beider Aufnahmehologramme **9** der zwei holographischen Kameras umfasst.

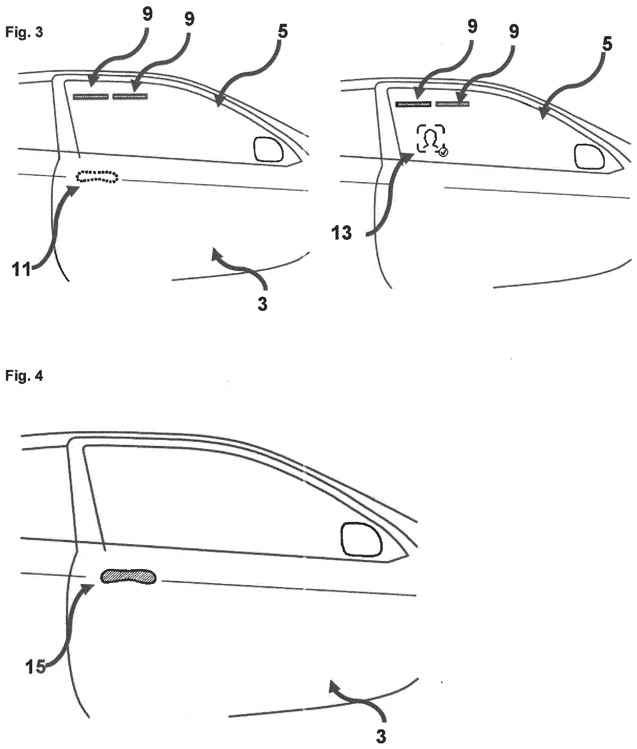

**Figur 3** zeigt ein Ausführungsbeispiel einer Fahrzeugtür mit einer funktionalisierten Scheibe **5,** welche zwei Aufnahmehologramme **9** für die stereoskopische Bildaufnahme aufweist. Dabei sind jeweils links und rechts zwei Beispiele gezeigt, wo aus einer Beleuchtung durch Umgebungslicht eine holographische Anzeige einer Bedienkomponente **11** erzeugt werden kann.

Im linken Beispiel ist diese "passive" holographische Anzeige der Bedienkomponente **11** nicht Teil der funktionalisierten Scheibe **5,** sondern der Türe **3** und zeigt die Position einer Bedienkomponente, hier des Türgriffs an. Diese "passive" holographische Anzeige ist vorzugsweise im Anzeigebereich sichtbar.

Im rechten Beispiel ist eine holographische Anzeige einer gewünschten Detektionsposition **13,** umfasst, hier vorzugsweise ebenfalls als "passives" Hologramm, welches nur durch Umgebungslicht beleuchtet wird. Die holographische Anzeige der gewünschten Detektionsposition **13** ist vorzugsweise aus dem Anzeigebereich heraus sichtbar und zeigt einer Person vor der Türe beispielsweise an, wo sie sich positionieren und in welche Richtung sie blicken muss.

Bei einem aktiven Hologramm ist ebenso vorstellbar, dass die holographische Anzeige der Detektionsposition **13** durch ein von der funktionalisierten Scheibe **5** umfasstes Anzeigehologramm realisiert ist, welches so gestaltet ist, dass es nach Position des Betrachters eine unterschiedliche Farbe aufweist. So ist beispielsweise denkbar, dass für eine Person im Anzeigebereich, welche nicht innerhalb der Detektionsposition positioniert ist, die Anzeige rot sichtbar ist, wobei sich die Anzeige **13** bei einem Positionswechsel in die Detektionsposition die Farbe wechselt und grün erscheint.

**Figur 4** zeigt ein Ausführungsbeispiel einer Fahrzeugtür **3,** wobei beispielsweise nach einer objektgebundenen Autorisierung eine holographische Bedienkomponente **15** angezeigt wird. Dabei ist diese holographische Bedienkomponente **15** Teil der Türe **3.**

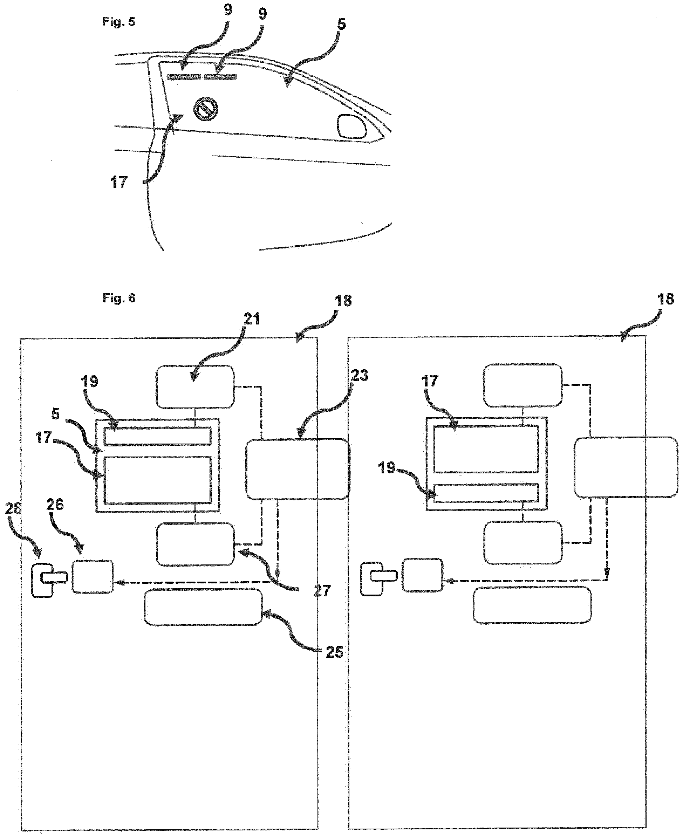

**Figur 5** zeigt eine Fahrzeugtür mit einer funktionalisierten Scheibe **5,** welche zwei Aufnahmehologramme **9** und eine holographische Anzeige **7** umfasst, welche ein Symbol einer Zutrittsverweigerung darstellt. Diese kann beispielsweise bei einer nicht erfolgreichen objektgebundenen und/oder personengebundenen Autorisierungskontrolle angezeigt werden.

**Figur 6** zeigt zwei verschiedene Ausführungsbeispiele für eine Haustür **18** mit dem beschriebenen System. Mindestens eine holographische Kamera **19** für eine stereoskopische Bildaufnahme (vorzugsweise sind es mindestens zwei) ist umfasst ist in der funktionalisierten Scheibe **5** umfasst, welche gleichsam einen Blick von außen durch die Tür **18** in den Innenraum hinter der Tür **18** ermöglicht. Die holographische Kamera **19** führt ein Kamerasignal **21** der Steuerungseinrichtung **23** zu, welche wiederum aufgrund der Bildaufnahmen die weiteren Schritte der Autorisierungskontrolle durchführt und beispielsweise bei einer Autorisierung ein Entriegelungssignal **25** (der Signalweg ist durch den gestrichelten Pfeil dargestellt) an die Schließkomponente **26** ausgibt. Die Schließkomponente **26** ist hier von einem Türschloss mit einem Türgriff als Bedienkomponente **28** umfasst. Des Weiteren kann durch die Steuerungseinrichtung ein Bildgebersignal oder ein Anzeigesignal **27** ausgegeben werden, durch das eine holographische Anzeige **7** in Gang gesetzt wird. Die holographische Anzeige **7** kann einer eintretenden Person beispielsweise anzeigen, wie viele Personen sich im Innenraum befinden. Der Unterschied zwischen der linken und der rechten Abbildung besteht in der Anordnung der holographischen Kamera **19** und der holographischen Anzeige **7,** wobei links die holographische Kamera **19** sich oben befindet und die holographische Anzeige **7** unten und rechts umgekehrt. Hier herrscht aufgrund des Aufbaus des Systems große Flexibilität.

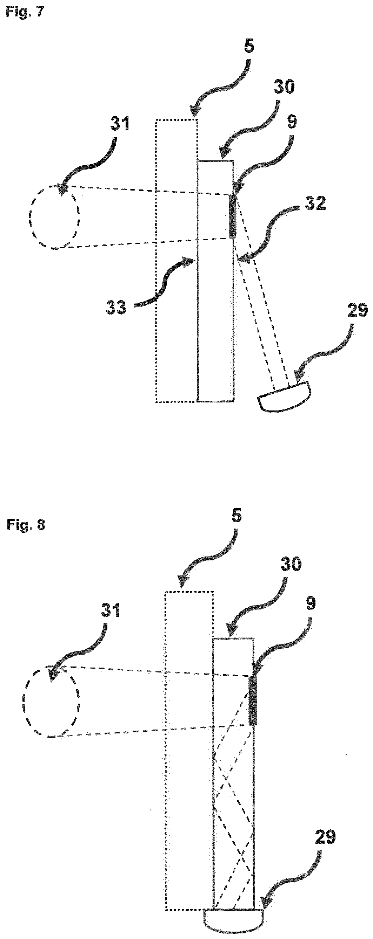

**Figur 7** zeigt eine Ausführungsform einer holographischen Kamera in einer Seitenansicht. Lichtstrahlen aus einem festgelegten Detektionsbereich **31** gegenüber der Vorderseite **33** des transparenten Basiskörpers **30** werden durch das Aufnahmehologramm **9** in Richtung eines Bildsensors **29** umgelenkt. Die Übertragung der Lichtstrahlen zwischen Aufnahmehologramm **9** und Bildsensor **29** findet bei dieser Ausführungsform "Freistrahl" außerhalb des Basiskörpers **30** statt. Das Aufnahmehologramm kann gleichzeitig abbildende Eigenschaften aufweisen. Das Aufnahmehologramm **9** kann auf den transparenten Basiskörper **9** aufgebracht vorliegen, bspw. in Form einer Beschichtung bzw. einer Folie. Der transparente Basiskörper kann gleichsam als funktionalisierte Scheibe **5** fungieren. Es kann jedoch eine separate Scheibe **5** umfasst sein (gepunktet gezeichnet), welche durch die Anordnung des transparenten Basiskörpers **30** an dieser funktionalisiert wird.

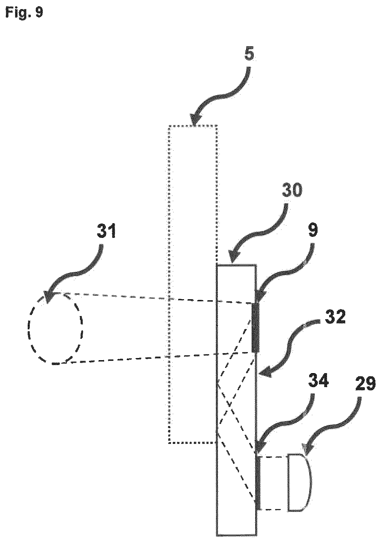

Typischerweise wären für eine stereoskopische Bildaufnahme zwei holographische Kameras, wie sie in der Figur 7 (aber auch in Figur 8 und Figur 9) gezeigt ist umfasst.

**Figur 8** zeigt eine weitere Ausführungsform einer holographischen Kamera in einer Seitenansicht. Bis auf die im folgenden beschriebene Lichtführung zwischen Aufnahmehologramm **9** und Bildsensor **29** ist der Aufbau im Wesentlichen mit dem aus Figur 7 identisch, daher soll hier nur auf diese Unterschiede eingegangen werden.

In der gezeigten Ausführungsform ist das Aufnahmehologramm **9** so ausgebildet, dass die Lichtstrahlen im transparenten Basiskörper **30** durch Totalreflektion geleitet werden. Der Bildsensor **29** ist dabei an einer unteren kurzen Seitenfläche des Basiskörpers **30** angeordnet, wohin die Lichtstrahlen durch Totalreflektion geleitet werden. Es wäre natürlich ebenso möglich, dass der Bildsensor **29** bei entsprechender Ausbildung des Aufnahmehologramms **9** an der oberen kurzen Seitenfläche des Basiskörpers **30** angeordnet würde. Wenn eine separate funktionalisierte Scheibe **5** (gepunktet gezeichnet) umfasst ist, muss zwischen dieser und dem Basiskörper **30** ein Unterschied im Brechungsindex realisiert werden, welcher die Totalreflektion im Basiskörper **5** ermöglicht. Dies kann bspw. durch eine Schicht, insbesondere eine Folie mit den entsprechenden Eigenschaften, welche sich zwischen Scheibe **5** und Basiskörper **30** befindet, realisiert werden. Ebenso möglich wäre, dass sich zwischen diesen ein Luftspalt befindet.

**Figur 9** zeigt eine Ausführungsform einer holographischen Kamera in einer Seitenansicht. Bis auf die im Folgenden beschriebene Auskopplung der Lichtstrahlen hin zum Bildsensor **29** ist der Aufbau im Wesentlichen mit dem aus Figur 8 und außer den Unterschieden von Figur 8 zur Figur 7 mit dieser identisch, daher soll hier nur auf die Unterschiede eingegangen werden. Auch im Basiskörper **30** gemäß Figur 8 werden die Lichtstrahlen durch Totalreflektion im Basiskörper **30** geleitet. Jedoch ist der Bildsensor **29** im gezeigten Beispiel an einer Rückseite **32** des Basiskörpers angeordnet und die geleiteten Lichtstrahlen werden durch ein Auskoppelhologramm **34** aus dem Basiskörper 30 ausgekoppelt und auf den Bildsensor **29** gerichtet. Das Auskoppelhologramm **34** kann dabei abbildende Eigenschaften aufweisen. Das Auskoppelfhologramm **34** kann in ähnlicher Weise wie das Aufnahmehologramm **9** auf den Basiskörper **5** aufgebracht oder in diesen integriert sein. Der Bildsensor kann auch an einer Vorderseite des Basiskörpers **30** angeordnet sein. Das Auskoppelhologramm **34** kann ein transmissives oder reflexives Hologramm umfassen. Wenn eine separate funktionalisierte Scheibe **5** (gepunktet gezeichnet) umfasst ist, kann der Teil des Basiskörpers **30,** an dem Aufnahmeholgramm **34** und Bildsensor **29** vorliegen, so unterhalb bzw. oberhalb (wenn der Bildsensor an einem oberen Ende des Basiskörpers **30** angeordnet ist) eines unteren bzw. oberen Endes der Scheibe **5** angeordnet sein, dass ein Hindurchsehen durch die Scheibe **5** durch insbesondere den Bildsensor **29** nicht beeinträchtigt wird bzw. dieser nicht zu sehen ist.

In analoger Weise wie vorstehend in den Figuren 7, 8 und 9 beschrieben kann die analoge Funktionsweise einer holographischen Anzeige **7** anhand dieser Figuren beschrieben werden. Anstelle des Bildsensors **29** würde dann jedoch eine Lichtquelle bzw. ein Bildgeber stehen, anstatt des Aufnahmehologramms **9** würde ein Anzeige- oder Projektionshologramm verwendet, der Detektionsbereich **31** könnte bspw. dem Anzeigebereich entsprechen, das Auskoppelhologramm **34** wäre stattdessen ein Einkoppelhologramm und insgesamt würde der Strahlenverlauf in umgekehrter Richtung verlaufen.

### BEZUGSZEICHENLISTE

- 1: Fahrzeug
- 3: Fahrzeugtür
- 5: Funktionalisierte Scheibe
- 7: Holographische Anzeige
- 9: Aufnahmehologramm
- 11: Holographische Anzeige der Bedienkomponente
- 13: Holographische Anzeige der Detektionsposition
- 15: Holographische Bedienkomponente
- 18: Eingangstür eines Gebäudes
- 19: Mindestens eine holographische Kamera für stereoskopische Bildaufnahme
- 21: Kamerasignal
- 23: Steuerungseinrichtung
- 25: Entriegelungssignal
- 26: Schließkomponente
- 27: Bildgebersignal oder Anzeigesignal
- 28: Bedienkomponente
- 29: Bildsensor
- 30: Transparenter Basiskörper
- 31: Festgelegter Detektionsbereich
- 32: Rückseite des transparenten Basiskörpers
- 33: Vorderseite des transparenten Basiskörpers
- 34: Auskoppelhologramm

## Patentansprüche

1. System für eine Türöffnungssteuerung einer Tür oder einer Klappe mit einer funktionalisierten Scheibe (5), umfassend:
- einen transparenten Basiskörper (30) mit einer Vorder- (33) und einer Rückseite (32) für die funktionalisierte Scheibe (5)
- eine erste holographische Anzeige (7) für eine an eine Person gerichtete Anzeige eines Bildes in einem festgelegten ersten Anzeigebereich gegenüber der Vorderseite (33) und/oder der Rückseite (32) des transparenten Basiskörpers (30)
- eine Steuerungseinrichtung (23)
- ein erstes Kommunikationsmittel zum Senden und Empfangen von Signalen
wobei erstes Kommunikationsmittel und Steuerungseinrichtung (23) eingerichtet sind für eine objektgebundene Autorisierungskontrolle eines zugeordneten, zweiten Kommunikationsmittels zum Senden und Empfangen von Signalen,
wobei die objektgebundene Autorisierungskontrolle auf einer Position und/oder Bewegung des zweiten Kommunikationsmittels in Bezug auf einen vorgegebenen Nahbereich des ersten Kommunikationsmittels beruht sowie auf Eigenschaften von zwischen erstem und zweitem Kommunikationsmittel ausgetauschten Signalen,
wobei holographische Anzeige (7) und Steuerungseinrichtung (23) eingerichtet sind, die Anzeige des Bildes bei der objektgebundenen Autorisierung des zweiten Kommunikationsmittels zu erzeugen,
wobei die Steuerungseinrichtung (23) des Weiteren eingerichtet ist, ein Entriegelungssignal (25) für ein Öffnen der Tür bei mindestens einer objektgebundenen Autorisierung auszugeben, weiterhin umfassend:
- mindestens eine holographische Kamera (19) für eine stereoskopische Bildaufnahme eines festgelegten Detektionsbereichs gegenüber der Vorderseite und/oder der Rückseite des transparenten Basiskörpers
wobei die holographische Kamera (19) mindestens ein von dem Basiskörper (30) umfasstes Aufnahmehologramm (9) zur Umlenkung von Lichtstrahlen aus dem Detektionsbereich (31) aufweist,
wobei die holographische Kamera (19) und die Steuerungseinrichtung (23) eingerichtet sind für eine personengebundene Autorisierungskontrolle einer durch die stereoskopische Bildaufnahme aufgenommenen Person, wobei die personengebundene Autorisierungskontrolle auf mindestens einer durch die stereoskopische Bildaufnahme feststellbaren Eigenschaft der Person beruht,
wobei die Steuerungseinrichtung (23) eingerichtet ist, ein Entriegelungssignal (25) für ein Öffnen der Tür bei der objektgebundenen Autorisierung und der personengebundenen Autorisierung auszugeben.

2. System nach dem vorherigen Anspruch, umfassend:
- eine Lichtquelle zur Beleuchtung mindestens eines von dem transparenten Basiskörper umfassten erstes Anzeigehologramms bei Eingang eines Anzeigesignals (27)
- mindestens ein von dem transparenten Basiskörper (30) umfasstes erstes Anzeigehologramm
wobei die Steuerungseinrichtung (23) eingerichtet ist, das Anzeigesignal (27) bei der objektgebundenen Autorisierung des zweiten Kommunikationsmittels an die Lichtquelle auszugeben
wobei das Anzeigehologramm und die Lichtquelle eingerichtet sind für die Erzeugung der Anzeige des Bildes bei der Beleuchtung des Anzeigehologramms durch die Lichtquelle.

3. System nach einem der vorherigen Ansprüche, umfassend:
- einen Bildgeber zur Erzeugung eines projizierbaren Bildes bei Eingang eines Bildgebersignals (27)
- mindestens ein von dem transparenten Basiskörper (30) umfasstes erstes Projektionshologramm
wobei die Steuerungseinrichtung (23) eingerichtet ist, das Bildgebersignal (27) bei der objektgebundenen Autorisierung des zweiten Kommunikationsmittels an den Bildgeber auszugeben
wobei das Projektionshologramm und der Bildgeber eingerichtet sind für die Erzeugung der Anzeige des Bildes bei der Erzeugung des projizierbaren Bildes durch den Bildgeber.

4. System nach einem oder mehreren der vorherigen Ansprüche,
wobei die Steuerungseinrichtung (23) eingerichtet ist, erst nach einer objektgebundenen Autorisierung eine personengebundene Autorisierungskontrolle zu ermöglichen.

5. System nach einem oder mehreren der vorherigen Ansprüche, umfassend weiterhin:
- eine Schließkomponente (26), welche eingerichtet ist für ein Ver- oder Entriegelung der Tür,
wobei die Schließkomponente (26) eingerichtet ist für eine Entriegelung der Tür bei der Ausgabe des Entriegelungssignals durch die Steuerungseinrichtung (23).

6. System nach einem oder mehreren der vorherigen Ansprüche, umfassend weiterhin:
- eine Bedienkomponente (28), welche eingerichtet ist für ein Bedienen der Tür durch die Person,
wobei die Bedienkomponente (28) bevorzugt eingerichtet ist für eine Aktivierung der Bedienkomponente (28) bei der Ausgabe des Entriegelungssignals (25) durch die Steuerungseinrichtung (23).

7. System nach einem oder mehreren der vorherigen Ansprüche 5 oder 6, wobei die Bedienkomponente (28) einen Näherungssensor auf Basis von Ultraschall, optischem Sensor, einer Drahtloskommunikationsschnittstelle und/oder Radar und/oder eine holographisch basierte Bedienkomponente (15) umfasst.

8. System nach einem oder mehreren der vorherigen Ansprüche, weiterhin umfassend:
- mindestens eine zweite holographische Anzeige (7) für eine an eine Person gerichtete Anzeige eines Bildes gegenüber der Vorderseite (33) und/oder der Rückseite (32) des transparenten Basiskörpers
wobei die zweite holographische Anzeige (7) eingerichtet ist, bei einer vorgegebenen Beleuchtung aus einem Umgebungslicht des transparenten Basiskörpers (30) die Anzeige Bildes zu erzeugen.

9. System nach einem oder mehreren der vorherigen Ansprüche, wobei die Anzeige des Bildes eine Anzeige einer Bedienkomponente (11), eine Anzeige einer Bedienaufforderung für die Bedienkomponente und/oder eine Anzeige einer gewünschte Detektionsposition (13) für die Person im Detektionsbereich (31) umfasst.

10. System nach einem oder mehreren der vorherigen Ansprüche, wobei die durch die stereoskopische Bildaufnahme feststellbare Eigenschaft eine Eigenschaft ist, welche geeignet ist für eine eindeutige Identifikation mindestens einer bestimmten Person und/oder
wobei die durch die stereoskopische Bildaufnahme feststellbare Eigenschaft eine Eigenschaft ist, welche geeignet ist für eine Zuordnung der Person zu einer bestimmten Personengruppe, vor allem zur Zuordnung der Personengruppe von erwachsenen Personen und/oder von nicht-erwachsenen Personen.

11. System nach einem oder mehreren der vorherigen Ansprüche, weiterhin umfassend:
- Einen Türöffner, welche eingerichtet ist, bei dem Entriegelungssignal (25) durch die Steuerungseinrichtung (23) und/oder einem Öffnungssignal durch die Bedienkomponente (28) eine Tür zu öffnen.

12. Tür mit funktionalisierter Scheibe (5), umfassend ein System nach einem oder mehreren der vorherigen Ansprüche, vorzugsweise für ein Fahrzeug (1), ein Gebäude und/oder ein Haushaltsgerät, insbesondere für einen Backofen, einen Kühlschrank und/oder eine Mikrowelle.

13. Verfahren für ein Türöffnungssteuerungssystem einer Tür oder Klappe mit einer funktionalisierten Scheibe (5), wobei das System aufweist:
- einen transparenten Basiskörper (30) mit einer Vorder- (33) und einer Rückseite (32) für die funktionalisierte Scheibe (5)
- eine erste holographische Anzeige (7) für eine an eine Person gerichtete Anzeige eines Bildes in einem festgelegten ersten Anzeigebereich gegenüber der Vorderseite (33) und/oder der Rückseite (32) des transparenten Basiskörpers (30)
- eine Steuerungseinrichtung (23)
- ein erstes Kommunikationsmittel zum Senden und Empfangen von Signalen
wobei das Verfahren die folgenden Schritte umfasst:
- Etablierung eines Signalaustausches mit einem zugeordneten, zweiten Kommunikationsmittel zum Senden und Empfangen von Signalen, wenn dieses sich im Sende- und Empfangsbereich des ersten Kommunikationsmittels befindet,
- Vornahme einer objektgebundenen Autorisierungskontrolle durch Steuerungseinheit (23) und erstem Kommunikationsmittel basierend auf einer Position und/oder Bewegung des zweiten Kommunikationsmittels in Bezug auf einen vorgegebenen Nahbereich des ersten Kommunikationsmittels sowie auf den Eigenschaften ausgetauschter Signale,
- Ausgabe eines Bildgebersignals (27) an die holographische Anzeige (7) durch die Steuerungseinrichtung (23) bei einer objektgebundenen und/oder personengebundenen Autorisierung
- Anzeige eines dem Bildgebersignal (27) entsprechendes Bild durch die holographische Anzeige (7), bevorzugt Anzeige einer Bedienkomponente (11), eine Anzeige einer Bedienaufforderung für die Bedienkomponente und/oder eine Anzeige einer gewünschte Detektionsposition (13) für die Person im Detektionsbereich
- Ausgabe eines Entriegelungssignals (25) durch die Steuerungseinheit (23) für ein Öffnen der Tür bei mindestens einer objektgebundenen Autorisierung des zweiten Kommunikationsmittels, wobei das System weiterhin umfasst:
- mindestens eine holographische Kamera (19) für eine stereoskopische Bildaufnahme eines festgelegten Detektionsbereichs (31) gegenüber der Vorderseite (33) und/oder der Rückseite (32) des transparenten Basiskörpers (30), wobei die holographische Kamera (19) mindestens ein von dem Basiskörper (30) umfasstes Aufnahmehologramm (9) zur Umlenkung von Lichtstrahlen aus dem Detektionsbereich (31) aufweist,
wobei das Verfahren weiterhin folgende Schritte umfasst:
- Vornahme einer personengebundene Autorisierungskontrolle einer durch die stereoskopische Bildaufnahme aufgenommenen Person durch holographische Kamera (19) und Steuerungseinrichtung (23), wobei die personengebundene Autorisierungskontrolle auf mindestens einer durch die stereoskopische Bildaufnahme feststellbaren Eigenschaft der Person beruht,
- Ausgabe eines Entriegelungssignal (25) für ein Öffnen der Tür durch die Steuerungseinrichtung (23) bei einer personengebundenen und einer objektgebundenen Autorisierung,
wobei die personengebundene Autorisierungskontrolle bevorzugt erst nach einer objektgebundenen Autorisierung vorgenommen wird.

14. Verfahren nach einem oder mehreren der vorherigen Ansprüche, wobei das System weiterhin umfasst:
- eine Schließkomponente (26), welche eingerichtet ist für ein Ver- oder Entriegelung der Tür,
wobei die Schließkomponente (26) eine Entriegelung der Tür bei der Ausgabe des Entriegelungssignals (25) durch die Steuerungseinrichtung (23) vornimmt.

15. Verfahren nach einem oder mehreren der vorherigen Ansprüche, wobei das System weiterhin umfasst:
- eine Bedienkomponente (28), welche eingerichtet ist für ein Bedienen der Tür durch die Person
wobei die Bedienkomponente (28) bei der Ausgabe des Entriegelungssignals (25) durch die Steuerungseinrichtung (23) aktiviert wird.

16. Verfahren nach einem oder mehreren der vorherigen Ansprüche, wobei das System weiterhin umfasst:
- Einen Türöffner zum Öffnen einer Tür,
wobei der Türöffner bei dem Entriegelungssignal (25) durch die Steuerungseinrichtung (23) und/oder einem Öffnungssignal durch die Bedienkomponente (28) eine Tür öffnet.

17. Verfahren nach einem oder mehreren der vorherigen Ansprüche,
wobei die durch die personengebundene Autorisierungskontrolle feststellbare Eigenschaft der Person eine individuelle Eigenschaft ist, welche die Identifikation mindestens einer bestimmten Person ermöglicht und/oder
wobei die durch die personengebundene Autorisierungskontrolle feststellbare Eigenschaft der Person eine Eigenschaft ist, welche geeignet ist für eine Zuordnung der Person zu einer bestimmten Personengruppe, vor allem zur Zuordnung der Personengruppe von erwachsenen Personen und/oder von nicht-erwachsenen Personen.

18. Verfahren nach einem oder mehreren der vorherigen Ansprüche,
wobei die Steuerungseinrichtung (23) aufgrund einer personengebundenen und/oder objektgebundenen Autorisierung ein datenbasiertes Nutzerprofil bereitstellt, welches mit einer autorisierten Person verknüpft ist und aufgrund dessen bevorzugt weitere, vom Nutzerprofil abhängige Ausgabesignale durch die Steuerungseinrichtung (23) erzeugt werden.

## Claims

1. System for a door opener controller of a door or hatch having a functionalized pane (5), comprising:
- a transparent main body (30) having a front side (33) and a back side (32) for the functionalized pane (5),
- a first holographic display (7) for a display of a picture, directed at a person, in a defined first display region vis-à-vis the front side (33) and/or the back side (32) of the transparent main body (30),
- a control device (23),
- a first communications means for transmitting and receiving signals,
wherein the first communications means and control device (23) are configured for an object-based authorization verification of an assigned, second communications means for transmitting and receiving signals,
wherein the object-based authorization verification is based on a position and/or movement of the second communications means in relation to a specified near region of the first communications means and on properties of signals exchanged between the first and second communications means,
wherein the holographic display (7) and control device (23) are configured to generate the display of the picture in the object-based authorization of the second communications means,
wherein the control device (23) is furthermore configured to output an unlock signal (25) for an opening of the door in the case of at least an object-based authorization, furthermore comprising:
- at least one holographic camera (19) for a stereoscopic picture recording of a defined detection region vis-à-vis the front side and/or the back side of the transparent main body,
wherein the holographic camera (19) comprises at least one recording hologram (9) which is comprised by the main body (30) and serves to divert light beams from the detection region (31),
wherein the holographic camera (19) and the control device (23) are configured for a person-based authorization verification of a person recorded by the stereoscopic picture recording, the person-based authorization verification being based on at least one property of the person establishable by the stereoscopic picture recording,
wherein the control device (23) is configured to output an unlock signal (25) for an opening of the door in the case of the object-based authorization and the person-based authorization.

2. System according to the preceding claim, comprising:
- a light source for illuminating at least one first display hologram which is comprised by the transparent main body upon reception of a display signal (27),
- at least one first display hologram which is comprised by the transparent main body (30),
wherein the control device (23) is configured to output the display signal (27) to the light source in the case of the object-based authorization of the second communications means,
wherein the display hologram and the light source are configured to generate the display of the picture when the display hologram is illuminated by the light source.

3. System according to either of the preceding claims, comprising:
- a picture generator for generating a projectable picture upon reception of a picture generating signal (27),
- at least one first projection hologram which is comprised by the transparent main body (30),
wherein the control device (23) is configured to output the picture generating signal (27) to the picture generator in the case of the object-based authorization of the second communications means,
wherein the projection hologram and picture generator are configured for the generation of the display of the picture in the case of the generation of the projectable picture by the picture generator.

4. System according to one or more of the preceding claims,
wherein the control device (23) is configured to enable a person-based authorization verification only after an object-based authorization.

5. System according to one or more of the preceding claims, furthermore comprising:
- a closure component (26) which is configured for locking or unlocking the door,
wherein the closure component (26) is configured for an unlocking of the door when the unlock signal is output by the control device (23).

6. System according to one or more of the preceding claims, furthermore comprising:
- an operator control component (28) which is configured for an operation of the door by the person, wherein the operator control component (28) is preferably configured for an activation of the operator control component (28) when the unlock signal (25) is output by the control device (23).

7. System according to one or more of preceding Claims 5 and 6, wherein the operator control component (28) comprises a proximity sensor based on ultrasound, optical sensor, a wireless communications interface and/or radar and/or a holography-based operator control component (15).

8. System according to one or more of the preceding claims, furthermore comprising:
- at least a second holographic display (7) for a display of a picture, directed at a person, vis-à-vis the front side (33) and/or the back side (32) of the transparent main body,
wherein the second holographic display (7) is configured to generate the display of the picture in the case of a specified illumination from an ambient light of the transparent main body (30).

9. System according to one or more of the preceding claims, wherein the display of the picture comprises a display of an operator control component (11), a display of an operation request for the operator control component and/or a display of a desired detection position (13) for the person in the detection region (31).

10. System according to one or more of the preceding claims, wherein the property establishable by the stereoscopic picture recording is a property suitable for an unambiguous identification of at least one specific person, and/or
wherein the property establishable by the stereoscopic picture recording is a property suitable for assigning the person to a specific person group, especially for assignment to the person group of adult persons and/or non-adult persons.

11. System according to one or more of the preceding claims, furthermore comprising:
- a door opener configured to open a door in the case of the unlock signal (25) by the control device (23) and/or an open signal by the operator control component (28).

12. Door with a functionalized pane (5), comprising a system according to one or more of the preceding claims, preferably for a vehicle (1), a building, and/or a domestic appliance, in particular for an oven, a refrigerator, and/or a microwave.

13. Method for a door opener control system for a door or hatch having a functionalized pane (5), the system comprising:
- a transparent main body (30) having a front side (33) and a back side (32) for the functionalized pane (5),
- a first holographic display (7) for a display of a picture, directed at a person, in a defined first display region vis-à-vis the front side (33) and/or the back side (32) of the transparent main body (30),
- a control device (23),
- a first communications means for transmitting and receiving signals,
wherein the method includes the following steps:
- establishing a signal exchange with an assigned, second communications means for transmitting and receiving signals if the latter is situated within the transmission and reception range of the first communications means,
- undertaking an object-based authorization verification by the control unit (23) and first communications means on the basis of a position and/or movement of the second communications means in relation to a specified near region of the first communications means and the properties of exchanged signals,
- outputting a picture generating signal (27) to the holographic display (7) by the control device (23) in the case of an object-based and/or person-based authorization,
- displaying a picture corresponding to the picture generating signal (27) by the holographic display (7), preferably the display of an operator control component (11), a display of an operation request for the operator control component and/or a display of a desired detection position (13) for the person in the detection region,
- outputting an unlock signal (25) by the control unit (23) for an opening of the door in the case of at least an object-based authorization of the second communications means, wherein the system furthermore comprises:
- at least one holographic camera (19) for a stereoscopic picture recording of a defined detection region (31) vis-à-vis the front side (33) and/or the back side (32) of the transparent main body (30), wherein the holographic camera (19) comprises at least one recording hologram (9) which is comprised by the main body (30) and serves to divert light beams from the detection region (31),
wherein the method furthermore comprises the following steps:
- undertaking a person-based authorization verification of a person recorded by the stereoscopic picture recording by the holographic camera (19) and the control device (23), the person-based authorization verification being based on at least one property of the person establishable by the stereoscopic picture recording,
- outputting an unlock signal (25) for an opening of the door by the control device (23) in the case of a person-based and an object-based authorization,
wherein the person-based authorization verification is preferably only undertaken after an object-based authorization.

14. Method according to one or more of the preceding claims, wherein the system furthermore comprises:
- a closure component (26) which is configured for locking or unlocking the door,
wherein the closure component (26) undertakes an unlocking of the door when the unlock signal (25) is output by the control device (23).

15. Method according to one or more of the preceding claims, wherein the system furthermore comprises:
- an operator control component (28) which is configured for an operation of the door by the person, wherein the operator control component (28) is activated when the unlock signal (25) is output by the control device (23).

16. Method according to one or more of the preceding claims, wherein the system furthermore comprises:
- a door opener for opening a door,
wherein the door opener opens a door in the case of the unlock signal (25) by the control device (23) and/or an open signal by the operator control component (28).

17. Method according to one or more of the preceding claims,
wherein the property of the person establishable by the person-based authorization verification is an individual property which allows the identification of at least one specific person, and/or
wherein the property of the person establishable by the person-based authorization verification is a property suitable for assigning the person to a specific person group, especially for assignment to the person group of adult persons and/or non-adult persons.

18. Method according to one or more of the preceding claims,
wherein the control device (23) provides a data-based user profile on the basis of a person-based and/or object-based authorization, the user profile being linked to an authorized person and further output signals that are dependent on the user profile preferably being generated by the control device (23) on account of said user profile.

## Revendications

1. Système de commande d'ouverture de porte d'une porte ou d'un volet doté d'une vitre fonctionnalisée (5), comprenant :
- un corps de base transparent (30) comportant une face avant (33) et une face arrière (32) pour la vitre fonctionnalisée (5)
- un premier affichage holographique (7) permettant un affichage d'une image destinée à une personne dans une première zone d'affichage définie en face de la face avant (33) et/ou de la face arrière (32) du corps de base transparent (30)
- un dispositif de commande (23)
- un premier moyen de communication destiné à émettre et à recevoir des signaux,
le premier moyen de communication et le dispositif de commande (23) étant conçus pour un contrôle d'autorisation lié à un objet d'un deuxième moyen de communication associé destiné à émettre et à recevoir des signaux,
le contrôle d'autorisation lié à un objet étant basé sur une position et/ou un mouvement du deuxième moyen de communication par rapport à une zone de proximité prédéfinie du premier moyen de communication ainsi que sur des propriétés de signaux échangés entre le premier moyen de communication et le deuxième moyen de communication,
l'affichage holographique (7) et le dispositif de commande (23) étant conçus pour générer l'affichage de l'image lors de l'autorisation liée à un objet du deuxième moyen de communication,
le dispositif de commande (23) étant en outre conçu pour délivrer un signal de déverrouillage (25) permettant une ouverture de la porte lors d'au moins une autorisation liée à un objet, comprenant en outre :
- au moins une caméra holographique (19) permettant une capture d'image stéréoscopique d'une zone de détection définie en face de la face avant et/ou de la face arrière du corps de base transparent,
la caméra holographique (19) comportant au moins un hologramme de capture (9) contenu dans le corps de base (30) pour dévier des rayons lumineux provenant de la zone de détection (31),
la caméra holographique (19) et le dispositif de commande (23) étant conçus pour un contrôle d'autorisation lié à une personne d'une personne capturée par la capture d'image stéréoscopique, le contrôle d'autorisation lié à une personne étant basé sur au moins une propriété de la personne identifiable au moyen de la capture d'image stéréoscopique,
le dispositif de commande (23) étant conçu pour délivrer un signal de déverrouillage (25) permettant une ouverture de la porte lors de l'autorisation liée à un objet et de l'autorisation liée à une personne.

2. Système selon la revendication précédente, comprenant :
- une source lumineuse destinée à éclairer au moins un premier hologramme d'affichage contenu dans le corps de base transparent lors de la réception d'un signal d'affichage (27)
- au moins un premier hologramme d'affichage contenu dans le corps de base transparent (30),
le dispositif de commande (23) étant conçu pour délivrer le signal d'affichage (27) à la source lumineuse lors de l'autorisation liée à un objet du deuxième moyen de communication,
l'hologramme d'affichage et la source lumineuse étant conçus pour la génération de l'affichage de l'image lors de l'éclairage de l'hologramme d'affichage par la source lumineuse.

3. Système selon l'une des revendications précédentes, comprenant :
- un générateur d'image destiné à générer une image projetable lors de la réception d'un signal de générateur d'image (27)
- au moins un premier hologramme de projection contenu dans le corps de base transparent (30),
le dispositif de commande (23) étant conçu pour délivrer le signal de générateur d'image (27) au générateur d'image lors de l'autorisation liée à un objet du deuxième moyen de communication,
l'hologramme de projection et le générateur d'image étant conçus pour la génération de l'affichage de l'image lors de la génération de l'image projetable par le générateur d'image.

4. Système selon l'une ou plusieurs des revendications précédentes,
dans lequel le dispositif de commande (23) est conçu pour ne permettre un contrôle d'autorisation lié à une personne qu'après une autorisation liée à un objet.

5. Système selon l'une ou plusieurs des revendications précédentes, comprenant en outre :
- un composant de fermeture (26) qui est conçu pour un verrouillage ou un déverrouillage de la porte,
le composant de fermeture (26) étant conçu pour un déverrouillage de la porte lorsque le signal de déverrouillage est délivré par le dispositif de commande (23).

6. Système selon l'une ou plusieurs des revendications précédentes, comprenant en outre :
- un composant d'actionnement (28) qui est conçu pour un actionnement de la porte par la personne,
le composant d'actionnement (28) étant de préférence conçu pour une activation du composant d'actionnement (28) lorsque le signal de déverrouillage (25) est délivré par le dispositif de commande (23).

7. Système selon l'une ou plusieurs des revendications 5 ou 6 précédentes, dans lequel le composant d'actionnement (28) comprend un capteur de proximité à base d'ultrasons, un capteur optique, une interface de communication sans fil et/ou un radar et/ou un composant d'actionnement à base holographique (15).

8. Système selon l'une ou plusieurs des revendications précédentes, comprenant en outre :
- au moins un deuxième affichage holographique (7) permettant un affichage d'une image destinée à une personne en face de la face avant (33) et/ou de la face arrière (32) du corps de base transparent,
le deuxième affichage holographique (7) étant conçu pour générer l'affichage de l'image lors d'un éclairage prédéfini provenant d'une lumière ambiante du corps de base transparent (30).

9. Système selon l'une ou plusieurs des revendications précédentes, dans lequel l'affichage de l'image comprend l'affichage d'un composant d'actionnement (11), l'affichage d'une invitation à l'actionnement destinée au composant d'actionnement et/ou l'affichage d'une position de détection souhaitée (13) pour la personne dans la zone de détection (31).

10. Système selon l'une ou plusieurs des revendications précédentes, dans lequel la propriété identifiable au moyen de la capture d'image stéréoscopique est une propriété qui permet une identification univoque d'au moins une personne déterminée et/ou
dans lequel la propriété identifiable au moyen de la capture d'image stéréoscopique est une propriété qui permet d'affecter la personne à un groupe de personnes déterminé, et notamment de l'affecter au groupe des personnes adultes et/ou des personnes non-adultes.

11. Système selon l'une ou plusieurs des revendications précédentes, comprenant en outre :
- un dispositif d'ouverture de porte, qui est conçu, lorsqu'un signal de déverrouillage (25) est fourni par le dispositif de commande (23) et/ou lorsqu'un signal d'ouverture est fourni par le composant d'actionnement (28), pour ouvrir une porte.

12. Porte dotée d'une vitre fonctionnalisée (5), comprenant un système selon l'une ou plusieurs des revendications précédentes, de préférence destinée à un véhicule (1), un bâtiment et/ou un appareil ménager, en particulier à un four, un réfrigérateur et/ou un four à micro-ondes.

13. Procédé destiné à un système de commande d'ouverture de porte d'une porte ou d'un volet doté d'une vitre fonctionnalisée (5), le système comportant :
- un corps de base transparent (30) comportant une face avant (33) et une face arrière (32) pour la vitre fonctionnalisée (5)
- un premier affichage holographique (7) permettant un affichage d'une image destinée à une personne dans une première zone d'affichage définie en face de la face avant (33) et/ou de la face arrière (32) du corps de base transparent (30)
- un dispositif de commande (23)
- un premier moyen de communication destiné à émettre et à recevoir des signaux,
le procédé comprenant les étapes suivantes :
- l'établissement d'un échange de signaux avec un deuxième moyen de communication associé destiné à émettre et à recevoir des signaux, lorsque celui-ci se trouve dans la zone d'émission et de réception du premier moyen de communication,
- l'exécution d'un contrôle d'autorisation lié à un objet par le dispositif de commande (23) et le premier moyen de communication, sur la base d'une position et/ou d'un mouvement du deuxième moyen de communication par rapport à une zone de proximité prédéfinie du premier moyen de communication ainsi que des propriétés de signaux échangés,
- l'envoi d'un signal de générateur d'image (27) à l'affichage holographique (7) par le dispositif de commande (23) lors d'une autorisation liée à un objet et/ou liée à une personne,
- l'affichage, par l'affichage holographique (7), d'une image correspondant au signal de générateur d'image (27), de préférence l'affichage d'un composant d'actionnement (11), l'affichage d'une invitation à l'actionnement pour le composant d'actionnement et/ou l'affichage d'une position de détection souhaitée (13) pour la personne dans la zone de détection,
- l'envoi d'un signal de déverrouillage (25) par le dispositif de commande (23) permettant une ouverture de la porte lors d'au moins une autorisation liée à un objet du deuxième moyen de communication, le système comprenant en outre :
- au moins une caméra holographique (19) permettant une capture d'image stéréoscopique d'une zone de détection (31) définie en face de la face avant (33) et/ou de la face arrière (32) du corps de base transparent (30), la caméra holographique (19) comportant au moins un hologramme de capture (9) contenu dans le corps de base (30) destiné à dévier des rayons lumineux provenant de la zone de détection (31),
le procédé comprenant en outre les étapes suivantes :
- l'exécution d'un contrôle d'autorisation lié à une personne d'une personne capturée par la capture d'image stéréoscopique par la caméra holographique (19) et le dispositif de commande (23), le contrôle d'autorisation lié à une personne étant basé sur au moins une propriété de la personne identifiable au moyen de la capture d'image stéréoscopique,
- l'envoi d'un signal de déverrouillage (25) permettant une ouverture de la porte par le dispositif de commande (23) lors d'une autorisation liée à une personne et d'une autorisation liée à un objet,
le contrôle d'autorisation lié à une personne étant de préférence réalisé seulement après une autorisation liée à un objet.

14. Procédé selon l'une ou plusieurs des revendications précédentes, dans lequel le système comprend en outre :
- un composant de fermeture (26) qui est conçu pour un verrouillage ou un déverrouillage de la porte,
le composant de fermeture (26) effectuant un déverrouillage de la porte lorsque le signal de déverrouillage (25) est délivré par le dispositif de commande (23).

15. Procédé selon l'une ou plusieurs des revendications précédentes, dans lequel le système comprend en outre :
- un composant d'actionnement (28) qui est conçu pour un actionnement de la porte par la personne,
le composant d'actionnement (28) étant activé lorsque le signal de déverrouillage (25) est délivré par le dispositif de commande (23).

16. Procédé selon l'une ou plusieurs des revendications précédentes, dans lequel le système comprend en outre :
- un dispositif d'ouverture de porte permettant l'ouverture d'une porte,
- le dispositif d'ouverture de porte ouvrant une porte lorsque le signal de déverrouillage (25) est fourni par le dispositif de commande (23) et/ou lorsqu'un signal d'ouverture est fourni par le composant d'actionnement (28).

17. Procédé selon l'une ou plusieurs des revendications précédentes,
dans lequel la propriété de la personne identifiable par le contrôle d'autorisation lié à une personne est une propriété individuelle qui permet l'identification d'au moins une personne déterminée et/ou
dans lequel la propriété de la personne identifiable par le contrôle d'autorisation lié à une personne est une propriété qui permet d'affecter la personne à un groupe de personnes déterminé, notamment de l'affecter au groupe des personnes adultes et/ou des personnes non-adultes.

18. Procédé selon l'une ou plusieurs des revendications précédentes,
dans lequel le dispositif de commande (23) fournit, sur la base d'une autorisation liée à une personne et/ou liée à un objet, un profil d'utilisateur à base de données qui est lié à une personne autorisée et sur la base duquel des signaux de sortie supplémentaires dépendant du profil d'utilisateur sont de préférence générés par le dispositif de commande (23).
